# EUROPÄISCHE PATENTANMELDUNG

(11) **EP 3 936 464 A1**
(43) Veröffentlichungstag der Anmeldung: **12.01.2022**
(21) Anmeldenummer: 21176863.5
(22) Anmeldetag: 31.05.2021
(51) Int. Cl.: B65G 25/02, B23Q 7/00

(54) **FÖRDERANLAGE MIT SCHWENKVERSATZACHSVORRICHTUNG**

(30) Priorität: 07.07.2020 DE 102020117830
(71) Anmelder: Manz AG, 72768 Reutlingen (DE)
(72) Erfinder: Freundt, Martin, 73732 Esslingen (DE)
(74) Vertreter: Negendanck, Matthias

(57) **Zusammenfassung**

Förderanlage 1 mit mindestens drei Achsvorrichtungen 3 zum Transport von einem Bauteilaufnahmeabschnitt 6 zur Aufnahme eines Bauteils 9 und/oder eines Bauteilhalters 8 auf einer Stationsstrecke S entlang einer Haupttransportrichtung H in einer Bauteilstation 2, wobei die Achsvorrichtungen 3 jeweils eine Wagenbaugruppe 7 mit dem Bauteilaufnahmeabschnitt 6 und mit einer Zustelleinrichtung 5 zum Zustellen des Bauteilaufnahmeabschnitts 6 von einem Ausweichzustand in eine Transportposition sowie eine Linearachseinrichtung 4 zum Verfahren des Bauteilaufnahmeabschnitts 6 in der Transportposition entlang der Stationsstrecke S in der Haupttransportrichtung H und zum Rückführen des Bauteilaufnahmeabschnitts in dem Ausweichzustand in einer Gegenrichtung aufweist, wobei mindestens eine der Achsvorrichtungen 3 als eine Schwenkversatzachsvorrichtung 11 zum Schwenken des Bauteilaufnahmeabschnitts 6 um einen Schwenkbereich 12 ausgebildet ist, um den Bauteilaufnahmeabschnitt 6 von dem Ausweichzustand in die Transportposition und/oder in Gegenrichtung zu bringen

## Beschreibung

Die Erfindung betrifft eine Förderanlage mit den Merkmalen des Oberbegriffs des Anspruchs 1.

Derartige Förderanlagen haben die Aufgabe, Werkstücke zu einer Station zu transportieren, um diese zu bearbeiten. Dabei dienen derartige Förderanlagen zugleich zur Aufspannung der Werkstücke, um diese relativ zu der Station in der Lage zu definieren.

In Abhängigkeit der Anforderungen der Station müssen die Förderanlagen die Werkstücke mit begrenzten Toleranzen relativ zu der Station anordnen und/oder mit definierter oder zumindest bekannter Geschwindigkeit relativ zu der Station bewegen oder temporär anzuhalten.

Die Druckschrift WO 03/070420 A1, die wohl den nächstkommenden Stand der Technik bildet, offenbart eine Zuführvorrichtung zum Zuführen von Werkstückträgern längs eines Gurtförderers mit einem gesteuert angetriebenen Transporteur, der den Werkstückträger in einer der Bearbeitungsstation vorgeordneten Übernahmestation untergreift und von dem Gurtförderer abhebt und ihn in angehobenem Zustand in die Bearbeitungsstation transportiert und dort während der Werkstückbearbeitung abstützt. Der Transporteur weist zwei Achsen auf, welche jeweils eine Platte zur Aufnahme der Bauteilträger bewegen. Die Platten werden umlaufend von den Achsen bewegt, wobei die Platten zunächst durch die Bearbeitungsstation durchgefahren werden, um den Werkstückträger abzugeben. Die Platten werden nachfolgend abgesenkt und in dem abgesenkten Zustand unter der Bearbeitungsstation hindurch wieder zurückgefahren, um einen neuen Werkstückträger aufzunehmen. Damit arbeiten die Platten in einem Umlaufprinzip.

Es ist eine Aufgabe der vorliegenden Erfindung, eine Förderanlage vorzuschlagen, wobei die Förderanlage eine verbesserte Anpassung an die geplante Anwendung ermöglicht. Diese Aufgabe wird durch eine Förderanlage mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Der Gegenstand der Erfindung ist eine Förderanlage, welche zur Förderung von Bauteilen und/oder von Bauteilhaltern für Bauteile geeignet und/oder ausgebildet ist. Somit kann die Förderanlage die Bauteile oder Bauteilhalter optional ergänzend mit Bauteilen fördern.

Die Bauteile können insbesondere als Werkstücke ausgebildet sein. Vorzugsweise sind die Bauteile länglich, insbesondere flächig ausgebildet. Vorzugsweise ist die Oberfläche der Bauteile flächig ausgebildet. Beispielsweise können die Bauteile als Platten oder Leisten realisiert sein. Die Bauteilhalter haben die Funktion, die Bauteile aufzunehmen, so dass die Bauteile über die Bauteilhalter gehalten werden. Optional bilden die Bauteile und/oder die Bauteilhalter einen Bestandteil der Förderanlage. Die Bauteilhalter können genau ein Bauteil oder mindestens ein Bauteil aufnehmen.

Die Förderanlage weist mindestens drei Achsvorrichtungen zum Transport von Bauteilaufnahmeabschnitten auf. Insbesondere kann die Förderanlage vier, fünf, sechs oder mehr Achsvorrichtungen mit gleicher oder unterschiedlicher Bauweise aufweisen. Insbesondere weist jede Achsvorrichtung mindestens oder genau einen Bauteilaufnahmeabschnitt auf. Der Bauteilaufnahmeabschnitt bildet eine mechanische Schnittstelle zur Aufnahme des genau oder mindestens einen Bauteils bzw. des genau oder mindestens einen Bauteilhalters. Der Bauteilaufnahmeabschnitt kann Organe, wie zum Beispiel Stifte, Greifer, aktive Organe, insbesondere aktive Greifer oder dergleichen, zur lagedefinierten Aufnahme des Bauteils und/oder des Bauteilhalters aufweisen. Vorzugsweise ist das Bauteil bzw. der Bauteilhalter überlappend oder sogar vollständig auf dem Bauteilaufnahmeabschnitt angeordnet.

Die Achsvorrichtungen sind bevorzugt unabhängig voneinander ausgebildet und können jeweils eine oder mehrere Einzelachsen, vorzugsweise genau zwei Einzelachsen zur Bewegung und/oder Manipulation des Bauteilaufnahmeabschnitts aufweisen. Optional weist die Achsvorrichtung weitere Achsen auf, die insbesondere keine Shuttle Funktion erfüllen, sondern eine Feinausrichtung des Bauteils bzw. Bauteilhalters im Sinne der Einstellung der Bauteilposition ermöglichen z.B. "Winkeljustage" oder "geradedrücken" oder dergleichen, um das Bauteil trotz Toleranzen in den Prozessbereich der Prozesseinheit, insbesondere des Druckkopfs zu bringen.

Die Achsvorrichtungen haben jeweils die Aufgabe, den zugeordneten Bauteilaufnahmeabschnitt auf mindestens oder genau einer Stationsstrecke entlang einer Haupttransportrichtung in mindestens oder genau einer Bauteilstation zu transportieren. Vorzugsweise werden die Bauteilaufnahmeabschnitte auf der Stationsstrecke geradlinig entlang einer Haupttransportrichtung transportiert. Die Bauteilstation kann beispielsweise eine Prozessfunktion und/oder eine Fertigungsfunktion und/oder eine Messfunktion aufweisen. Besonders bevorzugt weist die Bauteilstation eine Prozesseinheit auf, wobei der Bauteilaufnahmeabschnitt entlang der Stationsstrecke an der Prozesseinheit zur Prozessierung des Bauteils transportiert wird. Besonders bevorzugt wird der Bauteilaufnahmeabschnitt kontinuierlich entlang der Stationsstrecke transportiert. Mögliche Prozesse in der Bauteilstation und/oder relativ zu der Prozesseinheit sind: Bedrucken von Oberflächen der Bauteile; Vermessen von Oberflächen der Bauteile; Digitalisieren von Oberflächenstrukturen, Farben und Eigenschaften der Bauteile; Sonstige Prozessierung, Behandlung und/oder Analyse von Bauteiloberflächen; Prozessierung von Materialien oder der Bauteile bei kontinuierlicher oder alternativ bei getakteter Arbeitsweise.

Optional umfasst die Förderanlage die Bauteilstation. Optional definiert die Bauteilstation eine Prozessrichtung über die der Prozess in Richtung des Bauteils oder des Bauteilaufnahmeabschnitts erfolgt.

Die mindestens drei, vorzugsweise einige, im Speziellen alle Achsvorrichtungen der Förderanlage weisen jeweils eine Wagenbaugruppe und eine Linearachseinrichtung auf.

Die Linearachseinrichtung dient zum Verfahren des Bauteilaufnahmeabschnitts entlang der Stationsstrecke in der Haupttransportrichtung und zum Rückführen des Bauteilaufnahmeabschnitts in einer Gegenrichtung. Vorzugsweise weist die Linearachseinrichtung eine Länge von mehr als 2 m, vorzugsweise von mehr als 3 m, insbesondere von mehr als 4 m auf. Prinzipiell kann die Linearachseinrichtung die letzte Achse vor dem Bauteilaufnahmeabschnitt sein und/oder diesen unmittelbar bewegen. Es ist jedoch bevorzugt, dass die Linearachseinrichtung die Wagenbaugruppe mit dem Bauteilaufnahmeabschnitt trägt. Besonders bevorzugt erstreckt sich die Linearachseinrichtung parallel zu der Haupttransporteinrichtung. Besonders bevorzugt bewegt die Linearachseinrichtung den Bauteilaufnahmeabschnitt und/oder die Wagenbaugruppe oszillierend und/oder hin- und herfahrend in der Haupttransportrichtung.

Die Wagenbaugruppe weist mindestens oder genau einen der Bauteilaufnahmeabschnitte sowie eine Zustelleinrichtung zum Zustellen des Bauteilabschnitts von einem Ausweichzustand in eine Transportposition und/oder in Gegenrichtung auf. Die Förderanlage, insbesondere die Achsvorrichtung, im Speziellen die Linearachseinrichtung, ist ausgebildet, den Bauteilaufnahmeabschnitt in der Transportposition auf der Stationsstrecke entlang der Haupttransportrichtung zu verfahren. Insbesondere wird der Bauteilaufnahmeabschnitt durch die Zustelleinrichtung in die Transportposition gebracht und nachfolgend über die Linearachseinrichtung auf der Stationsstrecke verfahren. Beispielsweise nach der Stationsstrecke, insbesondere nach einem Entladen des Bauteilaufnahmeabschnitts, oder bereits beim Rückführen überführt die Zustelleinrichtung den Bauteilaufnahmeabschnitt in den Ausweichzustand. Während bevorzugt vorgesehen ist, dass die Zustelleinrichtung den Bauteilaufnahmeabschnitt auf der Stationsstrecke in der Transportposition nicht bewegt, kann die Zustelleinrichtung den Bauteilaufnahmeabschnitt bei der Rückführung, insbesondere in Gegenrichtung zu der Haupttransportrichtung, in dem Ausweichzustand bewegen, zum Beispiel solange oder soweit hierdurch keine Kollision des Bauteilaufnahmeabschnitts begründet wird.

Es kann vorgesehen sein, dass die Zustelleinrichtung einen eigenen Aktor und/oder mindestens oder genau eine eigene Achseinrichtung für die Zustellbewegung aufweist. Alternativ hierzu wird die Zustelleinrichtung über die Linearachseinrichtung angetrieben.

Es wird vorgeschlagen, dass mindestens eine, einige oder sogar alle der Achsvorrichtungen als eine Schwenkversatzvorrichtung ausgebildet ist. Die Schwenkversatzvorrichtungen hat die Funktion den Bauteilaufnahmeabschnitt um einen Schwenkbereich zu schwenken, insbesondere zu rotieren und/oder zu drehen. Das Schwenken kann als eine reine Rotationsbewegung ausgebildet sein, wobei in diesem Fall der Schwenkbereich als Schwenkachse ausgebildet ist. Alternativ hierzu kann das Schwenken als eine Rotations-Translationsbewegung ausgebildet sein, wobei der Schwenkbereich räumlich ausgedehnt ist. Durch das Schwenken wird der Bauteilaufnahmeabschnitt von dem Ausweichzustand in die Transportposition und/oder in Gegenrichtung gebracht.

Es ist dabei eine Überlegung, dass durch das Schwenken die Bauteilaufnahmeabschnitte nicht nur aus unterschiedlichen Richtungen in die Transportposition geklappt werden, sondern vielmehr, dass die Bauteilaufnahmeabschnitte auch in Gegenrichtung in unterschiedliche Richtungen weggeklappt werden, so dass diese einen Ausweichzustand erreichen, bei denen die Bauteilaufnahmeabschnitte voneinander beabstandet sind. Damit wird eine neue Möglichkeit geschaffen, um die Bauteilaufnahmeabschnitte kollisionsfrei aneinander und/oder an der Bauteilstation zurückzuführen. Während der Stand der Technik nur einen Versatz von zwei Bauteilträgern in eine gemeinsame Richtung zeigt, wird mit der Förderanlage ein Wegklappen ggf. in unterschiedliche Richtungen umgesetzt. Diese Ausgestaltung erlaubt eine verbesserte Anpassung der Förderanlage an geplante Anwendungen.

Besonders bevorzugt ist es, wenn der Bauteilaufnahmeabschnitt als ein Ausleger ausgebildet ist. Der Ausleger kann um den Schwenkbereich von der Transportposition in den Ausweichzustand und/oder in Gegenrichtung verschwenkt werden. Es ist bevorzugt, dass bei einer axialen Draufsicht in Haupttransportrichtung im Bereich der Stationsstrecke der Schwenkbereich auf einer Seite der Stationsstrecke angeordnet ist und sich der Ausleger zumindest abschnittsweise oder vollständig über die Stationsstrecke zu der Gegenseite erstreckt. Hierbei befindet sich der Bauteilaufnahmeabschnitt und/oder der Ausleger in der Transportposition. Alternativ oder ergänzend ist es bevorzugt, dass in dem Ausweichzustand der Schwenkbereich auf einer Seite, insbesondere auf der gleichen Seite, der Stationsstrecke angeordnet ist und der Ausleger auf der gleichen Seite der Stationsstrecke angeordnet ist. Mit dieser Ausgestaltung wird unterstrichen, dass durch die Schwenkversatzachsvorrichtung die Störkontur des Bauteilaufnahmeabschnitts insbesondere beim Rückfahren deutlich reduziert ist.

Bei einer bevorzugten Weiterbildung der Erfindung beträgt ein Schwenkwinkel von dem Übergang von dem Ausweichzustand in die Transportposition und/oder in Gegenrichtung mindestens 60°, vorzugsweise mindestens 75° und insbesondere mindestens oder genau 90° und/oder weniger als 120°, vorzugsweise weniger als 105°. Alternativ oder ergänzend ist ein rechtwinkliges Wegklappen des Bauteilaufnahmeabschnitts und/oder des Auslegers bevorzugt. Durch diesen Schwenkwinkel wird erreicht, dass der Bauteilaufnahmeabschnitt, insbesondere der Ausleger, in der Transportposition besonders weit auskragt und/oder in dem Ausweichzustand besonders platzsparend weggeklappt ist. Alternativ oder ergänzend wird der Bauteilaufnahmeabschnitt, insbesondere der Ausleger, von einer horizontalen Ausrichtung in der Transportposition in eine vertikale Ausrichtung in dem Ausweichzustand bzw. in Gegenrichtung überführt.

Besonders vorteilhaft ist es, wenn der Schwenkbereich zu der Haupttransportrichtung gleichgerichtet ist. Besonders bevorzugt ist der Schwenkbereich durch eine Schwenkachse definiert, wobei die Schwenkachse parallel zu der Haupttransportrichtung ausgerichtet ist. Hierdurch kann ein besonders platzsparender und damit kompakter Aufbau geschaffen werden.

Besonders kompakt kann die Förderanlage aufgebaut werden, wenn diese zwei der Schwenkachsvorrichtungen aufweist, welche beidseitig zu der Stationsstrecke angeordnet sind. Hierbei kann vorgesehen sein, dass die Bauteilaufnahmeabschnitte gegensinnig von dem Ausweichzustand in die Transportrichtung verschwenkt werden. Hierdurch ist ein symmetrischer oder zumindest ein symmetrienaher Aufbau möglich. Alternativ hierzu können diese auch gleichsinnig verschwenkt werden, wenn dies die konstruktiven Randbedingungen erlauben.

Bei einer Alternative oder Weiterbildung der Erfindung weist die Förderanlage zwei der Schwenkversatzachsvorrichtungen auf, wobei die Schwenkversatzachsvorrichtungen auf einer gemeinsamen Seite der Stationsstrecke angeordnet sind. Hier ist es bevorzugt, dass die Bauteilaufnahmeabschnitte gleichsinnig bewegt werden, wodurch ein besonders kompakter Aufbau möglich ist. Alternativ hierzu können diese auch gegensinnig verschwenkt werden, wenn dies die konstruktiven Randbedingungen erlauben.

Es ist möglich, dass der Bauteilaufnahmeabschnitt in Richtung der Prozesseinheit oder in Gegenrichtung verschwenkt oder geklappt wird.

Vorzugsweise ist das Nachfolgende vorgesehen:
Mindestens zwei der Achsvorrichtungen sind als Linearversatzachsvorrichtungen ausgebildet. Die Linearversatzachsvorrichtungen, insbesondere die jeweilige Zustelleinrichtung, versetzen den jeweiligen Bauteilaufnahmeabschnitt in einer linearen Richtung, vorzugsweise ausschließlich in der linearen Richtung und/oder geradlinig. Die Versatzbewegung erfolgt in eine Raumrichtung, insbesondere in einem Wagenkoordinatensystem, welches stationär in der Wagenbaugruppe angeordnet ist und durch die Linearachseinrichtung mitgeführt wird. Betrachtet man eine Projektionsebene, welche senkrecht zu der Haupttransportrichtung ausgerichtet ist, so definieren die Raumrichtungen jeweils eine Projektionsrichtung bei einer senkrechten Projektion der Raumrichtungen auf diese Projektionsebene.

Es wird ergänzend vorgeschlagen, dass die Projektionsrichtungen der mindestens zwei Achsvorrichtungen unterschiedlich ausgebildet sind. Die Unterschiede können sich auf die Erstreckung der Projektionsrichtung und/oder die Ausrichtung der Projektionsrichtung beziehen. Insbesondere wird die Projektionsrichtung bei dem Übergang von dem Ausweichzustand in die Transportposition betrachtet.

Es ist dabei eine Überlegung, dass durch die Nutzung von unterschiedlichen Raumrichtungen und/oder Projektionsrichtungen die Bauteilaufnahmeabschnitte nicht nur aus unterschiedlichen Raumrichtungen in die Transportposition gefahren werden, sondern vielmehr, dass die Bauteilaufnahmeabschnitte auch in Gegenrichtung in unterschiedliche Raumgegenrichtungen weggefahren werden, so dass diese einen Ausweichzustand erreichen, bei denen die Bauteilaufnahmeabschnitte voneinander beabstandet sind. Damit wird eine neue Möglichkeit geschaffen, um die Bauteilaufnahmeabschnitte kollisionsfrei aneinander und/oder an der Bauteilstation zurückzuführen. Während der Stand der Technik nur einen Versatz von zwei Bauteilträgern in eine gemeinsame Richtung zeigt, wird mit der Förderanlage ein Versatz in unterschiedliche Richtungen umgesetzt. Diese Ausgestaltung erlaubt eine verbesserte Anpassung der Förderanlage an geplante Anwendungen.

Bei einer bevorzugten konstruktiven Ausgestaltung der Erfindung setzt die Linearversatzachsvorrichtung, insbesondere in dem Wagenkoordinatensystem, einen Parallelversatz des Bauteilaufnahmeabschnitts um. Damit ist die Zustelleinrichtung besonders einfach zu realisieren.

Bei einer bevorzugten Weiterbildung der Erfindung ist vorgesehen, dass bei stehender Linearversatzachsvorrichtung, also wenn die Linearachseinrichtung deaktiviert ist, und/oder in dem Wagenkoordinatensystem, die Raumrichtungen der zwei Achsvorrichtungen, insbesondere der zwei Linearversatzachsvorrichtungen, jeweils in einer Linearversatzebene senkrecht zu der Haupttransportrichtung liegen und/oder im Wesentlichen senkrecht zu der Haupttransportrichtung ausgerichtet sind. "Im Wesentlichen senkrecht" wird als eine Abweichung von der Senkrechten von weniger als 20°, vorzugsweise von weniger als 15° und im Speziellen von weniger als 10° oder 5° definiert. Durch diese Weiterbildung wird ein kartesisches bzw. quasikartesisches Robotersystem geschaffen, welches konstruktiv und/oder steuerungstechnisch besonders einfach umsetzbar ist.

Bei einer bevorzugten Weiterbildung der Erfindung definieren die Bauteilaufnahmeabschnitte in der Stationsstrecke einen einheitlichen Referenzprojektionspunkt auf der Projektionsebene. Es ist vorgesehen, dass die Projektionsrichtungen diesen einheitlichen Referenzprojektionspunkt aufweisen. Dabei kann zum einen vorgesehen sein, dass sich die Projektionsrichtungen in dem Referenzprojektionspunkt schneiden. In diesem Fall wird ein erster Bauteilaufnahmeabschnitt aus einer ersten Raumrichtung und ein zweiter Bauteilaufnahmeabschnitt aus einer zweiten Raumrichtung zur Transportposition verfahren, wobei die Projektionsrichtungen der Raumrichtungen einen Winkel ungleich von 0° einnehmen.

Bei einer Alternative hierzu sind die Raumrichtungen und/oder die Projektionsrichtungen antiparallel oder im Wesentlichen antiparallel ausgerichtet. Damit sind die Raumrichtungen und/oder Projektionsrichtungen identisch oder zumindest ähnlich, jedoch gegenläufig zueinander ausgerichtet. Dabei können auch Winkelabweichungen von kleiner als 15°, vorzugsweise kleiner als 10°, im Speziellen kleiner als 5° zum Einsatz kommen. In diesem Fall wird ein erster Bauteilaufnahmeabschnitt aus einer ersten Raumrichtung und ein zweiter Bauteilaufnahmeabschnitt aus einer zweiten Raumrichtung zur Transportposition verfahren, wobei die Projektionsrichtungen der Raumrichtungen einen Winkel von 0° ggf. mit den genannten Winkelabweichungen zueinander einnehmen. Anders ausgedrückt werden die Bauteilaufnahmeabschnitte gegenläufig in Richtung der Transportposition verfahren und/oder die Raumrichtungen und/oder die Projektionsrichtungen liegen in einer gemeinsamen Ebene. Bei einer besonders einfachen Ausgestaltung der Erfindung liegen die Raumrichtungen und/oder die Projektionsrichtungen in einer Horizontalebene als die gemeinsame Ebene. Bildlich gesprochen werden die Bauteilaufnahmeabschnitte von links bzw. rechts in die Stationsstrecke über die Zustelleinrichtung eingefahren.

Bei möglichen Weiterbildung der Erfindung, können die Raumrichtungen und/oder die Projektionsrichtungen in einem beliebigen Winkelzwischenbereich liegen. So sind die Projektionsrichtungen und/oder Raumrichtungen nicht auf eine 12:00 Uhr - 3:00 Uhr - 6:00 Uhr - 9:00 Uhr - Position beschränkt, sondern diese können jeden beliebigen Zwischenwinkel einnehmen. Beispielsweise kann vorgesehen sein, dass zwischen Projektionsrichtungen von zwei der Linearachsvorrichtungen ein stumpfer oder ein spitzer Zwischenwinkel vorliegt. Insbesondere liegt kein rechter (90°) oder gestreckter Winkel (180°) vor.

Es wird vorgeschlagen, dass mindestens zwei, vorzugsweise mindestens drei, vier, fünf oder mehr der Achsvorrichtungen so ausgebildet sind, dass die Bauteilaufnahmeabschnitte in dem Ausweichzustand in dem Bereich der Stationsstrecke seitlich versetzt zueinander angeordnet und/oder anordenbar sind. Insbesondere weisen die Bauteilaufnahmeabschnitte beim optional zeitversetzten Durchqueren der Stationsstrecke einen Versatz in einer Versatzrichtung zueinander auf, wobei die Versatzrichtung senkrecht zu der Haupttransportrichtung und senkrecht zu einem Lot und/oder zu der Prozessrichtung ausgerichtet ist. Optional sind die Bauteilaufnahmeabschnitte ergänzend höhenversetzt zueinander angeordnet und/oder anordenbar.

Es ist dabei eine Überlegung der Erfindung, dass durch den Versatz der Bauteilaufnahmeabschnitte in seitlicher Richtung neue Möglichkeiten geschaffen werden, um die Bauteilaufnahmeabschnitte kollisionsfrei aneinander und/oder an der Bauteilstation zurückzuführen. Während der Stand der Technik nur einen Höhenversatz zeigt, wird erfindungsgemäß mit der Förderanlage ein seitlicher Versatz umgesetzt. Diese Ausgestaltung erlaubt eine verbesserte Anpassung der Förderanlage an geplante Anwendungen. Insbesondere ermöglicht der seitliche Versatz, dass drei oder mehr Achsvorrichtungen verwendet werden können, wohingegen der Stand der Technik auf zwei derartige Achsen beschränkt ist. Bei einer bevorzugten Weiterbildung der Erfindung sind die Bauteilaufnahmeabschnitte in dem Ausweichzustand derart seitlich versetzt zueinander angeordnet, so dass diese in dem Bereich der Stationsstrecke kollisionsfrei aneinander und/oder an einem der sich durch die Stationsstrecke S bewegenden, insbesondere sich in der Transportposition befindlichen Bauteilaufnahmeabschnitt vorbeifahren können. Insbesondere können auch die jeweiligen Wagenbaugruppen aneinander und/oder an der Bauteilstation vorbeifahren. Damit ist es möglich, dass die Bauteilaufnahmeabschnitte der mindestens zwei Achsvorrichtungen zumindest beim Rückführen und/oder in der Gegenrichtung kollisionsfrei und damit unabhängig voneinander verfahren werden können. Der Bereich der Stationsstrecke kann der Länge der Bauteilstation in Haupttransportrichtung entsprechen. Es kann jedoch vorgesehen sein, dass der Bereich der Stationsstrecke nur durch einen Teil der Stationsstrecke gebildet ist.

Es ist weiterhin bevorzugt, dass die Wagenbaugruppe bei der Rückführung des Bauteilaufnahmeabschnitts im Bereich der Stationsstrecke ein Rückführvolumen nutzt. Der Querschnitt des Rückführvolumens wird durch die Störkontur der Wagenbaugruppe gebildet. Es ist vorgesehen, dass die Rückführvolumen der zwei Achsvorrichtungen nicht-überlappend oder sogar voneinander beabstandet sind. Durch diese Weiterbildung wird erreicht, dass die Wagenbaugruppen und damit die Bauteilaufnahmeabschnitte kollisionsfrei aneinander vorbeifahren können.

Bei einer bevorzugten Ausgestaltung der Erfindung können mindestens zwei, einige oder alle der Bauteilaufnahmeabschnitte entlang der Stationsstrecke wahlfrei angeordnet werden. Insbesondere können die Bauteilabschnitte der Achseinrichtung wahlfrei angeordnet werden, die in dem Ausweichzustand seitlich versetzt angeordnet sind und/oder anordenbar sind. Während im Stand der Technik die zwei Werkzeugträger konstruktionsbedingt nur abwechselnd durch die Bearbeitungsstation gefahren werden können, wird durch den zeitlichen Versatz und insbesondere durch die kollisionsfreie Rückführung erreicht, dass die Bauteilaufnahmeabschnitte in einer beliebigen Reihenfolge und damit wahlfrei durch die Stationsstrecke gefahren werden können. Bei dieser Ausgestaltung ist es somit möglich, immer den Bauteilaufnahmeabschnitt durch die Stationsstrecke zu fahren, welcher beispielsweise als erster mit einem Bauteilhalter und/oder mit einem Bauteil bestückt ist. Für den Fall, dass mehr als zwei Achsvorrichtungen vorgesehen sind, kann somit eine beliebige Reihenfolge erreicht werden.

Es ist besonders bevorzugt, dass die Bauteilaufnahmeabschnitte entlang der Stationsstrecke durch die Bauteilstation möglichst lückenlos durchgefahren werden, um eine maximale Auslastung der Bauteilstation zu erreichen. Die Auslastung der Bauteilstation kann zum einen vergrößert werden, indem mehr Achsvorrichtungen zum Einsatz kommen. Dies ist mit der erfindungsgemäßen Förderanlage möglich, da aufgrund des seitlichen Versatzes mehr als zwei Achsvorrichtungen, wie diese im Stand der Technik bekannt ist, verwendet werden können. Ferner muss durch die wahlfreie Anordnung der Bauteilaufnahmeabschnitte bei einem verzögerten Beladen eines Bauteilaufnahmeabschnitts nicht zwingend auf diesen Bauteilaufnahmeabschnitt gewartet werden, sondern es kann ein anderer Bauteilaufnahmeabschnitt eingereiht werden.

Bei einer bevorzugten Weiterbildung der Erfindung weist die Achsvorrichtung, insbesondere einige oder alle Achsvorrichtungen eine Versorgungseinrichtung zur Versorgung der Wagenbaugruppe mit Energie, insbesondere elektrischer, pneumatischer, hydraulischer Energie, Steuersignalen und/oder zum Austausch von weiteren Signalen, wie zum Beispiel Sensorsignals, auf. Beispielsweise ist die Versorgungseinrichtung als eine Schleppkette und/oder Energieführungskette ausgebildet, welche in Haupttransportrichtung hin und her geschleppt wird. Die Energieführungskette (auch Energiekette, E-Kette oder Schleppkette) ist ein Bauteil im Maschinenbau, das flexible Kabel, pneumatische oder hydraulische Leitungen führt und schützt. Solche Kabel sind an einem Maschinenteil, in diesem Fall der Wagenbaugruppe, angeschlossen, welches dauernd hin und her bewegt wird. Ohne eine solche Führung, die die Einhaltung des kleinsten zulässigen Biegeradius der Kabel garantiert, würden die Kabel unter der Dauerbelastung rasch zerstört. Vorzugsweise sind mindestens zwei, drei, einigen oder allen Achsvorrichtungen eine derartige Versorgungseinrichtung zugeordnet. Die Versorgungseinrichtung ist im Betrieb dauerhaft mit der Wagenbaugruppe verbunden, insbesondere derart, dass die Wagenbaugruppe ununterbrochen und/oder ungetrennt mit der Energie und/oder den Signalen versorgt ist. Durch den seitlichen Versatz können auch die Versorgungseinrichtungen seitlich zueinander versetzt angeordnet werden, so dass diese unabhängig voneinander in der Haupttransportrichtung geschleppt werden können. Diese Weiterbildung fördert die wahlfreie Anordnung der Bauteilaufnahmeabschnitte entlang der Stationsstrecke.

Die Bauteilhalter - auch als Shuttles zu bezeichnen - können als passive Bauteilhalter und/oder Aufspannungen für das Bauteil ausgebildet sein. Damit wird das Bauteil auf dem Bauteilhalter angeordnet und optional fixiert. Alternativ hierzu können die Bauteilhalter als aktive Bauteilhalter ausgebildet sein und z.B. weitere Funktionen einnehmen. Beispielsweise können die Bauteilhalter Zusatzachsen zur Manipulation des Bauteils aufweisen. Beispielsweise können die Bauteilhalter Drehachsen, Schwenkachsen oder Linearachsen aufweisen. Alternativ oder ergänzend können die Bauteilhalter Sensoren, wie zum Beispiel Geschwindigkeitssensoren, Positionssensoren, Temperatursensoren etc., aufweisen.

Alternativ oder ergänzend kann der Bauteilaufnahmeabschnitt Sensorik tragen, die für den Betrieb oder die Diagnostik des Bauteilhalters verwendbar ist (Beschleunigungssensoren, Positions- und/oder Geschwindigkeitsensorik, Drucksensoren, Temperatur und Strahlungssensoren (z.B. für die Vermessung von UV-Licht-Aushärtelampen in der Anlage).

Alternativ oder ergänzend kann der Bauteilhalter Sensorik tragen, die für die Überwachung des Bauteils verwendet wird: Drucksensoren, Temperatursensoren, Kraftsensoren, Positionssensoren, Vibrationssensoren und/oder Farbsensoren usw.

Zwischen Bauteilhalter und Bauteilaufnahmeabschnitt können sich Zusatzachsen befinden, die eventuell dem Bauteilhalter zuordbar sind, oder eine Erweiterung für eine Zusatzfunktion bereitstellen und separat vom Bauteilhalter ausgebildet sind. Die Zusatzachsen können eine separate Zusatzvorrichtung bilden.

Die Versorgung der aktiven Bauteilhalter kann unmittelbar durch die Versorgungseinrichtung und/oder mittelbar durch die Wagenbaugruppe erfolgen.

Bei einer besonders effizienten Umsetzung der Förderanlage ist vorgesehen, dass die Zustelleinrichtung als eine Einachseinrichtung ausgebildet ist. Prinzipiell kann die Zustelleinrichtung beliebig realisiert sein, so zum Beispiel als eine Kurvenbahn, eine Drehachse, eine Linearachse etc. Es ist jedoch besonders kostengünstig, wenn diese als eine Einachseinrichtung ausgebildet ist und/oder nur einen einzigen Freiheitsgrad aufweist, da hier nur ein Antriebsmotor benötigt wird und/oder eingesetzt ist. Die Betriebsweise und/oder Energieversorgung der Zustelleinrichtung kann über einen elektrischen Anschluss, einen pneumatischen Anschluss, einen hydraulischen Anschluss und/oder Wirkmechanismus oder einen sonstigen Anschluss erfolgen. Der Anschluss und/oder Wirkmechanismus wird vorzugsweise über die Versorgungseinrichtung geführt.

Bei möglichen Ausgestaltungen der Erfindung führt die Zustelleinrichtung eine ausschließliche Linearbewegung, eine ausschließliche Drehbewegung oder eine gekoppelte Linear-Drehbewegung durch um den Bauteilaufnahmeabschnitt zwischen dem Ausweichzustand der Transportposition zu bewegen.

Dadurch, dass die Förderanlage Achsvorrichtungen aufweist, denen jeweils eine Linearachseinrichtung zugeordnet ist, können die Bauteilaufnahmeabschnitte und/oder Wagenbaugruppe der verschiedenen Achsvorrichtungen unabhängig voneinander fahren. Somit können die Bauteilaufnahmeabschnitte und/oder Wagenbaugruppen beladen und entladen werden ohne den Materialfluss in der mindestens einen Bauteilstation zu stören. Damit ist es möglich, dass der Bauteilstation kontinuierlich Bauteile zugeführt werden können und die Prozessierung der Bauteile in der Bauteilstation kontinuierlich und damit effizient erfolgt. Dies wird insbesondere durch eine unabhängige Bewegbarkeit der Bauteilaufnahmeabschnitte und/oder Wagenbaugruppen erreicht.

Bei einer möglichen Ausgestaltung der Erfindung ist mindestens eine der Achsvorrichtungen als eine Linearschwenkachsvorrichtung ausgebildet. Bei der Linearschwenkachsvorrichtung wird der zugehörige Bauteilaufnahmeabschnitt über die Zustelleinrichtung 5 in der Wagenbaugruppe verschwenkt. Die Schwenkung erfolgt koplanar und/oder in einer gemeinsamen Ebene, wie diese durch den Bauteilaufnahmeabschnitt in der Transportposition eingenommen wird. Die Linearschwenkachsvorrichtung kann auch als eine Linearversatzachsvorrichtungen und/oder als eine Schwenkversatzachsvorrichtung bezeichnet werden.

Bei einer bevorzugten Weiterbildung der Erfindung ist die oder mindestens eine Linearversatzachsvorrichtung als eine Hubversatzachsvorrichtung ausgebildet, wobei der Bauteilaufnahmeabschnitt in der Höhe und/oder parallel zu der Prozessrichtung durch die Zustelleinrichtung versetzbar ist und/oder versetzt wird. Diese Weiterbildung stellt einen Sonderfall dar, da dieser vorsieht, dass der Bauteilaufnahmeabschnitt in dem Ausweichzustand ausschließlich höhenversetzt zurückgeführt wird.

Bei einer besonders bevorzugten Realisierung der Erfindung weist die Förderanlage zwei derartige Hubversatzachsvorrichtungen auf, wobei diese Hubversatzachsvorrichtungen in dem Ausweichzustand auf einer gemeinsamen Seite der Stationsstrecke angeordnet sind. Soweit diese Hubversatzachsvorrichtungen jeweils eine Versorgungseinrichtung aufweisen, welche beispielsweise als Schleppkette ausgebildet ist, können diese umlaufend in einer vorgegebenen Reihenfolge die Stationsstrecke abfahren. Es wird vorgeschlagen, dass die Förderanlage mindestens eine weitere Linearversatzachsvorrichtung und/oder mindestens eine Schwenkversatzachsvorrichtung aufweist. Auf diese Weise ist eine besonders kompakte Ausführungsform für eine Förderanlage mit genau drei oder mindestens drei Achsvorrichtungen gegeben.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine stark schematisierte Darstellung einer Förderanlage in Seitenansicht als ein Ausführungsbeispiel der Erfindung;
- Figur 2: eine stark schematisierte Darstellung einer Förderanlage in Vorderansicht als ein Ausführungsbeispiel der Erfindung;
- Figuren 3 a - d: stark schematisierte Darstellungen von Förderanlagen in Vorderansicht als weitere Ausführungsbeispiele der Erfindung;
- Figur 4: eine stark schematisierte Darstellung einer Förderanlage in dreidimensionaler Ansicht als ein Ausführungsbeispiel der Erfindung;
- Figuren 5 a - c: stark schematisierte Darstellungen von Förderanlagen in Vorderansicht als weitere Ausführungsbeispiele der Erfindung;
- Figur 6: eine stark schematisierte Darstellung einer Förderanlage in Vorderansicht als ein Ausführungsbeispiel der Erfindung;
- Figuren 7 a - c: stark schematisierte Darstellungen von Förderanlagen in Vorderansicht als weitere Ausführungsbeispiele der Erfindung;
- Figur 8: eine stark schematisierte Darstellung einer Förderanlage in Vorderansicht als ein Ausführungsbeispiel der Erfindung;
- Figuren 9 a, b: stark schematisierte Darstellungen von Förderanlagen in Vorderansicht als weitere Ausführungsbeispiele der Erfindung;
- Figuren 10 a, b: stark schematisierte Darstellungen von Förderanlagen in Vorderansicht als weitere Ausführungsbeispiele der Erfindung;
- Figur 11: eine stark schematisierte Darstellung einer Förderanlage in Draufsicht als ein weiteres Ausführungsbeispiel der Erfindung.

Einander entsprechende oder gleiche Teile sind in den Figuren jeweils mit den gleichen Bezugszeichen versehen.

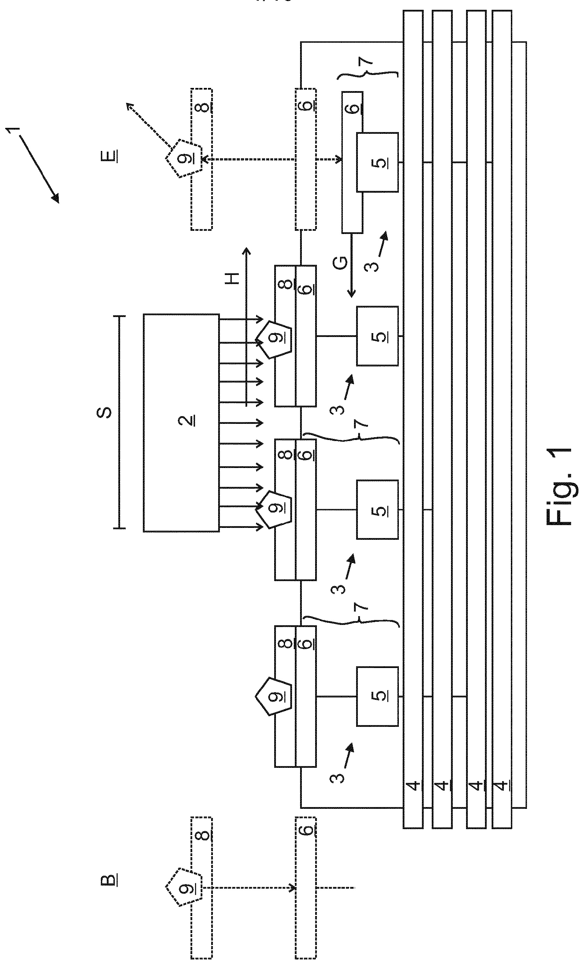

Die Figur 1 zeigt in einer stark schematisierten Darstellung eine seitliche Ansicht von einer Förderanlage 1 als ein Ausführungsbeispiel der Erfindung. Es ist eine Bauteilstation 2 gezeigt, welche optional einen Teil der Förderanlage 1 bildet. Die Bauteilstation 2 kann beispielsweise einen Prozesskopf, eine Prozesseinheit oder einen Bearbeitungskopf (nicht gezeigt) aufweisen. Es könne auch mehrere Bauteilstationen 2 und/oder Bearbeitungsköpfe vorgesehen sein.

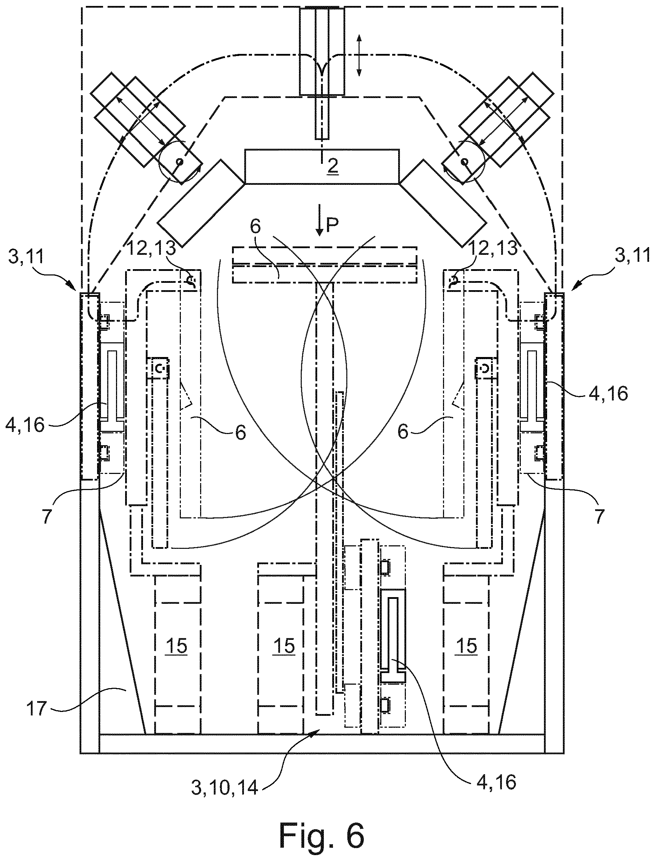

Die Förderanlage 1 weist eine Mehrzahl von Achsvorrichtungen 3 auf, welche jeweils eine Linearachseinrichtung 4, eine Zustelleinrichtung 5 sowie einen Bauteilaufnahmeabschnitt 6 umfassen. Die Zustelleinrichtung 5 und der Bauteilaufnahmeabschnitt 6 bilden jeweils gemeinsam eine Wagenbaugruppe 7. In der Figur 6 ist ein Ausführungsbeispiel für ein Gestell 17 gezeigt, wobei das Gestell 17 die Achsvorrichtungen 3 trägt. Das Gestell 17 kann auch mehrteilig sein. Die Führungsschienen für die Linearachseinrichtung 4 sind im Sinne der Präzision bevorzugt durchgehend und insbesondere einteilig und/oder einstückig ausgebildet. Diese können jedoch bei größeren Förderanlagen 1 (z.B. mit einer Länge der Führungsschienen größer als 4 m) aufgrund der Länge Stoßstellen aufweisen, die in der Förderanlage fest verbunden sind.

Die Linearachseinrichtung 4 hat die Funktion, die Wagenbaugruppe 7 in einer Haupttransportrichtung H sowie in einer Gegenrichtung G zu transportieren. Insbesondere ist die Linearachseinrichtung 4 jeweils oszillierend und/oder hin- und herfahrend ausgebildet. Beispielsweise weist die Linearachseinrichtung eine Schiene (nicht dargestellt) auf bzw. an der die Wagenbaugruppe 7 in Haupttransportrichtung H sowie in Gegenrichtung G transportiert wird.

Der Bauteilaufnahmeabschnitt 6 hat die Funktion einen Bauteilhalter 8 und/oder ein Bauteil 9 aufzunehmen. Die Beladung erfolgt beispielsweise vor der Förderanlage 1 in einer oder mehreren Beladestationen B und nach der Förderanlage 1 in einer oder mehreren Entladestationen E. Die Beladestation(en) B und die Entladestation(en) E können auch als eine gemeinsame Station ausgebildet sein. Dies kann z.B. umgesetzt werden, indem das Bauteil in "Ausweichstellung" sicher gehalten werden kann.
Die Bauteilaufnahmeabschnitte 6 werden nach der Beladung auf einer Stationsstrecke S an der Bauteilstation 2 nacheinander vorbei transportiert und dabei von der Bauteilstation 2 prozessiert und zwar in einer Prozessrichtung P als Wirkrichtung. Die Prozessrichtung P kann wie dargestellt senkrecht zu der Haupttransportrichtung H ausgerichtet sein, es sind jedoch auch andere Wirkrichtungen möglich. Nach der Prozessierung werden die Bauteilaufnahmeabschnitte 6 in der Entladestation E entladen und in der Gegenrichtung G zurücktransportiert.

Entlang der Stationsstrecke S befinden sich die Bauteilaufnahmeabschnitte 6 jeweils in einer Transportposition, so dass diese in der Bauteilstation 2 lagerichtig prozessiert werden können. In der Gegenrichtung G befinden sich die Bauteilaufnahmeabschnitte 6 jeweils in einem Ausweichzustand, so dass diese kollisionsfrei gegenüber den Bauteilaufnahmeabschnitten 6 in der Transportposition zurücktransportiert werden können. Nachdem die Bauteilaufnahmeabschnitte 6 entladen sind gilt für den Ausweichzustand nur, dass dieser Kollisionen vermeiden muss. In der Entladestation E und/oder in der Beladestation B können die Bauteilaufnahmeabschnitte 6 eine beliebige Position einnehmen.

Der Übergang von der Transportposition in den Ausweichzustand und/oder in Gegenrichtung wird durch die Zustelleinrichtung 5 umgesetzt, welche auf der Linearachseinrichtung 4 transportiert wird.

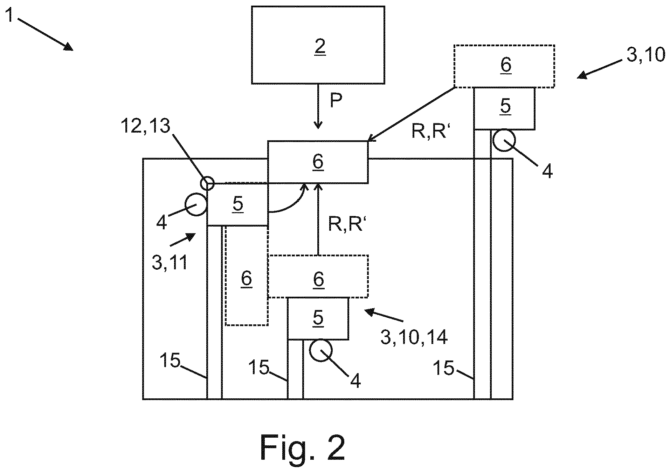

Die Figur 2 zeigt die Förderanlage 1 der Figur 1 in einer schematischen axialen Draufsicht, wobei nur drei Achsvorrichtungen 3 dargestellt sind, um unterschiedliche Arten der Achsvorrichtungen 3 zu illustrieren.

Zwei der Achsvorrichtungen 3 sind als Linearversatzachsvorrichtungen 10 ausgebildet. Die Linearversatzachsvorrichtung 10 weisen die Linearachseinrichtung 4, die Zustelleinrichtung 5 sowie den Bauteilaufnahmeabschnitt 6 auf. Die Zustelleinrichtung 5 verfährt den Bauteilaufnahmeabschnitt 6 von dem Ausweichzustand, in dem der Bauteilaufnahmeabschnitt 6 gestrichelt dargestellt ist, in die Transportposition. Das Zustellen des Bauteilaufnahmeabschnitts 6 erfolgt entlang einer Raumrichtung R, wobei die Raumrichtung R in der gezeigten axialen Projektion eine Projektionsrichtung R' ergibt, wobei die Raumrichtung R und/oder die Projektionsrichtung P geradlinig ausgebildet ist bzw. sind. Insbesondere erfolgt das Zustellen durch einen Parallelversatz des Bauteilaufnahmeabschnitts 6.

Eine der Achsvorrichtungen 3 ist als eine Schwenkversatzachsvorrichtung 11 ausgebildet. Die Schwenkversatzachsvorrichtung 11 weist die Linearachseinrichtung 4, die Zustelleinrichtung 5 sowie den Bauteilaufnahmeabschnitt 6 auf. Die Zustelleinrichtung 5 verfährt den Bauteilaufnahmeabschnitt 6 von dem Ausweichzustand, in dem der Bauteilaufnahmeabschnitt 6 gestrichelt dargestellt ist, in die Transportposition. Das Zustellen des Bauteilaufnahmeabschnitts 6 erfolgt durch ein Schwenken des Bauteilaufnahmeabschnitts 6 um einen Schwenkbereich 12, wobei bei diesem Ausführungsbeispiel der Schwenkbereich 12 als eine Schwenkachse 13 ausgebildet ist. Der Schwenkbereich 12 und/oder die Schwenkachse 13 ist bei diesem Ausführungsbeispiel gleichgerichtet und/oder parallel zu der Haupttransportrichtung H ausgerichtet.

Eine der Achsvorrichtungen 3 ist als eine Hubversatzachsvorrichtung 14 ausgebildet, wobei die Hubversatzachsvorrichtung 14 einen Spezialfall der Linearversatzachsvorrichtung 10 darstellt. Die Hubversatzachsvorrichtung 14 weist die Linearachseinrichtung 4, die Zustelleinrichtung 5 sowie den Bauteilaufnahmeabschnitt 6 auf. Die Zustelleinrichtung 5 verfährt den Bauteilaufnahmeabschnitt 6 von dem Ausweichzustand, in dem der Bauteilaufnahmeabschnitt 6 gestrichelt dargestellt ist, in die Transportposition. Das Zustellen des Bauteilaufnahmeabschnitts 6 erfolgt entlang einer Raumrichtung R, wobei die Raumrichtung R in der gezeigten axialen Projektion eine Projektionsrichtung R' ergibt wobei die Raumrichtung R und/oder die Projektionsrichtung R' geradlinig ausgebildet ist. Insbesondere erfolgt das Zustellen durch einen Parallelversatz des Bauteilaufnahmeabschnitts 6. Bei der Hubversatzachsvorrichtung 14 wird der Bauteilabschnitt 6 in der Höhe und/oder in Prozessrichtung P versetzt.

Durch den Einsatz der Zustelleinrichtungen 5 sind die Bauteilaufnahmeabschnitte 6 in dem Ausweichzustand seitlich, insbesondere in Bezug auf die Prozessrichtung P und/oder zu der Stationsstrecke, versetzt zueinander angeordnet. Hierdurch wird erreicht, dass die Bauteilaufnahmeabschnitte 6 beim Rückführen im Bereich der Stationsstrecke S kollisionsfrei aneinander und/oder an Bauteilaufnahmeabschnitten 6 in der Transportposition vorbeigefahren werden können. Diese Eigenschaft hat den weiteren Vorteil, dass zumindest einige der Bauteilaufnahmeabschnitte wahlfrei entlang der Stationsstrecke S angeordnet werden können, da sich diese wechselseitig z.B. entlang der Stationsstrecke S überholen können. Die Kollisionsfreiheit liegt bei bevorzugten Ausgestaltungen auch außerhalb der Stationsstrecke S vor, da bereits beim Einfahren in die Stationsstrecke S die Bauteile 9 prozessdefiniert unterwegs sein müssen. Daher dürfen sich mindestens eine Bauteillänge und/oder Bauteilhalterlänge vor und nach der Stationsstrecke S die Zustelleinrichtungen 5 nicht mehr bewegen.

Mindestens die Zustelleinrichtungen 5 benötigen eine Energieversorgung und/oder Datenkommunikation. Hierzu weisen die Achsvorrichtungen 3 jeweils eine Versorgungseinrichtung 15 auf, wobei die Versorgungseinrichtung 15 beispielsweise als eine Schleppkette und/oder Energieführungskette ausgebildet ist. Wie sich unmittelbar aus der Figur 2 ergibt, können die Versorgungseinrichtungen 15 unabhängig voneinander entlang der Haupttransportrichtung H transportiert werden. Es ist insbesondere nicht notwendig, einer An- und/oder Abkopplung der Versorgungseinrichtung 15 umzusetzen. Vielmehr kann die Versorgungseinrichtung 15 durchgehend mit der Wagenbaugruppe 7 und/oder mit einer Energiequelle verbunden bleiben.

Betrachtet man die Hubversatzachsvorrichtung 14 als Spezialfall einer Linearversatzachsvorrichtung sowie die Linearversatzachsvorrichtung 10, so erkennt man, dass die Raumrichtungen R bzw. die Projektionsrichtungen R' unterschiedlich ausgebildet sind und insbesondere zwischen dem Projektionsrichtungen R' ein Zwischenwinkel ungleich 0° vorgesehen ist, um den seitlichen Versatz zu erreichen. Dagegen wird bei der Schwenkversatzachsvorrichtung 11 der seitliche Versatz durch das Schwenken des Bauteilaufnahmeabschnitts 6 um den Schwenkbereich 12 bzw. die Schwenkachse 13 erreicht.

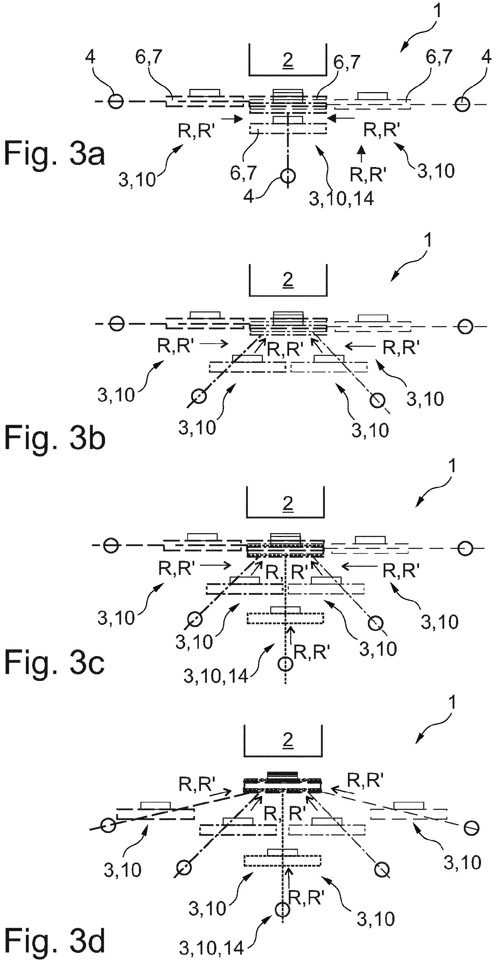

Die Figuren 3 a bis 3 d zeigen in einer schematischen axialen Draufsicht von vorne vier unterschiedliche Ausführungsbeispiele der Förderanlage 1. Während in den Figuren nur Linearversatzachsvorrichtungen 10 gezeigt sind, können diese Ausführungsbeispiele auch dahingehend abgewandelt werden, dass statt einer der Linearversatzachsvorrichtungen 10 (beispielsweise stets die ganz linke Linearversatzachsvorrichtung 10) durch die Schwenkversatzachsvorrichtung 11 aus der Figur 2 ersetzt wird. Es ist auch möglich, weitere Schwenkversatzachsvorrichtungen 11 zu verwenden.

Die Figur 3 a zeigt die Förderanlage 11 mit drei Linearversatzachsvorrichtungen 10, wobei eine der drei Linearversatzachsvorrichtungen 10 als eine Hubversatzachsvorrichtung 14 ausgebildet ist. Zwei der Linearversatzachsvorrichtungen 10 liegen in einer gemeinsamen Ebene, in diesem Fall einer Horizontalebene. Jeder der Achsvorrichtungen 3 in der Figur 3 a weist eine Linearachseinrichtung 4 sowie eine Zustelleinrichtung (nicht gezeigt) auf, wobei die Zustelleinrichtung sowie der Bauteilaufnahmeabschnitt 6 gemeinsam die Wagenbaugruppe 7 bilden.

Im Betrieb werden vor der Stationsstrecke S die jeweiligen Bauteilaufnahmeabschnitte 6 seitlich in die Stationsstrecke S eingefahren und nach der Stationsstrecke S wieder durch die Zustelleinrichtung 5 ausgefahren. Die Bewegung erfolgt in diesem Ausführungsbeispiel in der Horizontalebene, so dass die Raumrichtung R bzw. die Projektionsrichtung R' gegenläufig zueinander angeordnet sind. Die Hubversatzachsvorrichtung 14 stellt wie in der Figur 2 beschrieben den Bauteilaufnahmeabschnitt 6 durch einen Höhenversatz zur Verfügung. Die drei Bauteilaufnahmeabschnitte 6 können auf der Stationsstrecke S wahlfrei angeordnet werden. Die drei Raumrichtungen R bzw. Projektionsrichtungen R' sind senkrecht zueinander ausgerichtet.

Die Figur 3 b zeigt die Förderanlage 1 mit vier Linearversatzachsvorrichtungen 10, wobei zwei der Linearversatzachsvorrichtungen 10 wie in der Figur 3 a auf der Horizontalebene angeordnet sind. Die anderen zwei Linearversatzachsvorrichtungen 10 sind angeordnet, so dass deren Raumrichtung R bzw. Projektionsrichtung R' einen Zwischenwinkel von ca. 45° zu der Projektionsrichtung P einnimmt.

Die Figur 3 c zeigt die Förderanlage 1 mit fünf Linearversatzachsvorrichtungen 10, wobei zwischen den unteren zwei Linearversatzachsvorrichtungen 10 eine Hubversatzachsvorrichtung 14 angeordnet ist.

Die Figur 3 d zeigt eine Förderanlage 1 mit fünf Linearversatzachsvorrichtungen 10, wobei eine der Linearversatzachsvorrichtungen 10 als eine Hubversatzachsvorrichtung 14 ausgebildet ist und die anderen Linearversatzachsvorrichtungen 10 in einem Zwischenwinkel ungleich 0° und 180° angeordnet sind.

Besonders ist darauf hinzuweisen, dass die Versorgungseinrichtung 15 (nicht dargestellt), insbesondere ausgebildet als Schleppkette, bei den Achsvorrichtungen 3 in den Figuren 3 a - 3 d voneinander unabhängig sind, so dass diese nicht wechselseitig kollidieren.

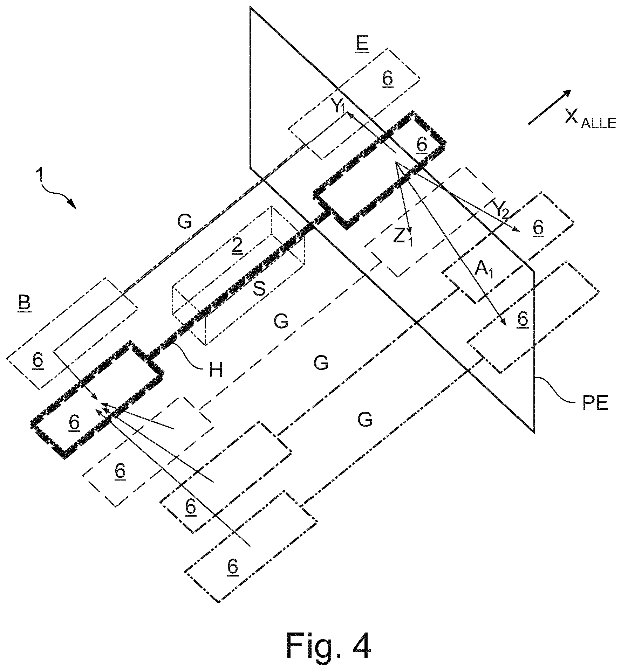

In der Figur 4 ist eine dreidimensionale Darstellung der Förderanlage 1 aus der Figur 3 d exemplarisch gezeigt, um den Weg der Bauteilaufnahmeabschnitte 6 zu zeigen. Dabei sind jedoch alle Bauteilaufnahmeabschnitte 6 in den gleichen Positionen gezeigt. Im Bereich der Beladestation B befinden sich die Bauteilaufnahmeabschnitte 6 jeweils in dem Ausweichzustand. Von dort aus können Sie über die jeweilige Zustelleinrichtung 5 in die Transportposition überführt werden. Dadurch, dass die Bauteilaufnahmeabschnitte 6 nacheinander in die Transportposition überführt werden, können diese sequenziell und/oder nacheinander durch die Bauteilstation 2 durchgefahren werden. Im Bereich der Entladestation E nach der Stationsstrecke S werden die Bauteilaufnahmeabschnitte 6, insbesondere nach dem Entladen des Bauteils 9 bzw. des Bauteilhalters 8 mit dem Bauteil 9, über die Zustelleinrichtung 5 von der Transportposition in den Ausweichzustand überführt und können in der Gegenrichtung G wieder in Richtung der Beladestation B gefahren werden. Durch den seitlichen Versatz der Bauteilaufnahmeabschnitte 6 bzw. den unterschiedlichen Raumrichtungen R und/oder den unterschiedlichen Projektionsrichtungen R', insbesondere auf einer Projektionsebene PE, die senkrecht zu der Haupttransportrichtung H orientiert ist, können die Bauteilaufnahmeabschnitte 6 kollisionsfrei an der Stationsstrecke S mit den Bauteilaufnahmeabschnitten 6 in Transportposition und/oder an den anderen Bauteilaufnahmeabschnitten 6 vorbeifahren. Sofern der Abstand und/oder die unterschiedene Projektionsrichtung R' entsprechend gewählt sind, können alle Bauteilaufnahmeabschnitte 6 wahlfrei an dem Beginn der Stationsstrecke S positioniert werden. Für den Fall, dass die Bauteilaufnahmeabschnitte 6 in dem Ausweichzustand entlang der Stationsstrecke S überlappen können diese nicht wahlfrei positioniert werden. Optional ergänzend kann statt einer oder mehrerer der gezeigten Linearversatzachsvorrichtung 10 eine oder mehrere Schwenkversatzachsvorrichtung 11 verwendet werden.

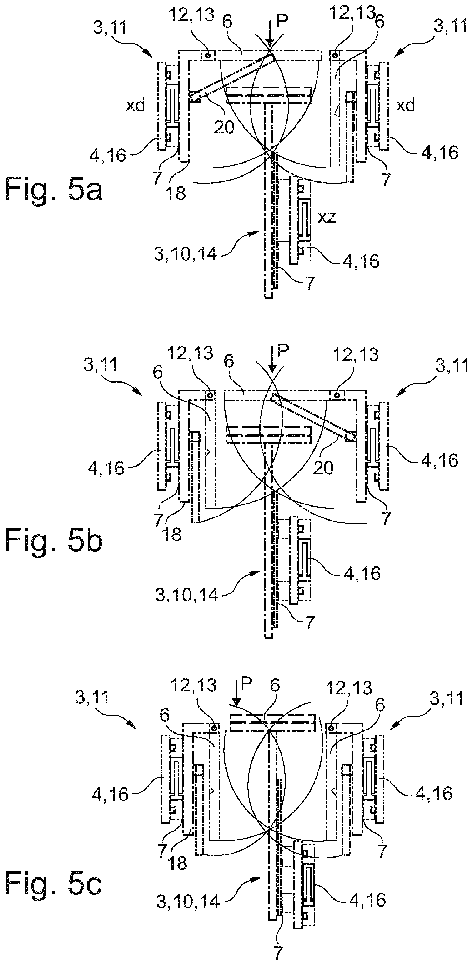

Die Figuren 5 a, b, c zeigen ein weiteres Ausführungsbeispiel für eine Förderanlage 1, wobei die Förderanlage 1 drei Achsvorrichtungen 3 aufweist, wobei zwei der Achsvorrichtungen 3 als Schwenkversatzachsvorrichtungen 11 und eine der Achsvorrichtungen 3 als eine Linearversatzvorrichtung 10, in diesem Ausführungsbeispiel als eine Hubversatzachsvorrichtung 14 ausgebildet ist.

Die Achsvorrichtungen 3 weisen jeweils eine Wagenbaugruppe 7 auf, wobei die Wagenbaugruppe 7 über eine Führung 16 als Teil der Linearachseinrichtung 4 in der Haupttransportrichtung H geführt sind.

Die zwei Schwenkversatzachsvorrichtungen 11 sind beidseitig zu der Stationsstrecke S angeordnet und weisen jeweils den Bauteilaufnahmeabschnitt 6 auf, welcher über den Schwenkbereich 12, hier ausgebildet als Schwenkachse 13, die parallel zu der Haupttransportrichtung H ist, um 90° geschwenkt werden können. In der Transportposition, wie dies für die linke Schwenkversatzachsvorrichtungen 11 in der Figur 5 a gezeigt ist, ist der Bauteilaufnahmeabschnitt 6 normal und/oder senkrecht zu der Prozessrichtung P ausgerichtet. Für den Sonderfall, dass die Prozessrichtung P lotrecht ist, ist der Bauteilaufnahmeabschnitt 6 horizontal ausgerichtet. In den Figuren 5 b, c ist die gleiche Schwenkversatzachsvorrichtungen 11 in dem Ausweichzustand, wobei der Bauteilaufnahmeabschnitt 6 um 90° zurück geschwenkt ist. Für den Sonderfall, dass die Prozessrichtung P lotrecht ist, ist der Bauteilaufnahmeabschnitt 6 vertikal ausgerichtet. Die andere Schwenkversatzachsvorrichtungen 11 ist symmetrisch und/oder gegengleich zu der ersten Schwenkversatzachsvorrichtungen 11 ausgebildet und auf der gegenüberliegenden Seite der Stationsstrecke S angeordnet. In den Figuren 5 a, c befindet sich der Bauteilaufnahmeabschnitt 6 in dem Ausweichzustand, in der Figur 5 b befindet sich der Bauteilaufnahmeabschnitt 6 in der Transportposition.

Mittig zwischen den zwei Schwenkversatzachsvorrichtungen 11 ist die Hubversatzachsvorrichtung 14 angeordnet, wobei diese in den Figuren 5 a, b in dem Ausweichzustand ist und sich in der Figur 5 c in der Transportposition befindet. Der Übergang von dem Ausweichzustand in die Transportposition erfolgt durch einen Höhenversatz und/oder einen Versatz gegen die Prozessrichtung P, so dass die Raumrichtung R bzw. die Projektionsrichtung R' gegenläufig zu der Prozessrichtung P ist.

Im Betrieb wird im Bereich der Beladestation B zunächst die erste Schwenkversatzachsvorrichtungen 11 in die Transportposition gebracht und kann nachfolgend entlang der Stationsstrecke S in der Bauteilstation 2 prozessiert werden. Nachfolgend wird die andere Schwenkversatzachsvorrichtungen 11 in die Transportposition gebracht und entlang der Stationsstrecke S in der Bauteilstation 2 prozessiert. Während dieser prozessiert wird, kann, insbesondere in der Entladestation E, der Bauteilaufnahmeabschnitt 6 der ersten Schwenkversatzachsvorrichtungen 11 entladen und in den Ausweichzustand überführt werden. Danach wird der Bauteilaufnahmeabschnitt 6 der Hubversatzachsvorrichtung 14 in die Transportposition gebracht und entlang der Stationsstrecke S in der Bauteilstation prozessiert. Während dieser prozessiert wird, kann der Bauteilaufnahmeabschnitt 6 der ersten Schwenkversatzachsvorrichtungen 11 in der Beladestation B wieder beladen werden und in die Transportposition überführt werden.

Die gezeigten drei Bauteilaufnahmeabschnitte 6 können in beliebiger Reihenfolge, d.h. wahlfrei, entlang der Stationsstrecke S angeordnet werden. Optional ergänzend kann die Förderanlage 1 eine weitere Linearversatzachsvorrichtungen 10, wie diese in der Figur 4 gezeigt ist, aufweisen, die einen vierten Bauteilaufnahmeabschnitt 6 bereitstellen kann.

Jede der gezeigten Achsvorrichtungen 3 in den Figuren 5 a, b, c, und optional ergänzend die zusätzliche Linearversatzachsvorrichtungen 10 kann eine Versorgungseinrichtung 15, beispielsweise ausgebildet als Schleppkette, aufweisen, welche bei dem oszillierenden Verfahren der Linearachseinrichtungen 4 unabhängig voneinander bewegt werden können. Die Achsvorrichtungen 3 sind seitlich versetzt zueinander angeordnet.

Der Bauteilaufnahmeabschnitt 6 ist jeweils über eine Abstützung 20 an einem Halter 18 abgestützt, um eine ausreichende mechanische Versteifung des Bauteilaufnahmeabschnitts 6 zu erreichen. Die Abstützung 20 ist als eine Strebe ausgebildet, welche in dem Ausweichzustand eingeklappt ist.

Die Figur 6 zeigt eine mögliche konstruktive Ausgestaltung der Förderanlage 1 mit den drei Achsvorrichtungen aus den Figuren 5 a, b, c. Ergänzend zu den Komponenten der vorhergehenden Figuren ist nun die Bauteilstation 2 sowie ein Gestell 17 zu erkennen, an denen die jeweiligen Linearachseinrichtung in 4 und/oder die Führungen 16 festgelegt sind. Zudem sind die Versorgungseinrichtungen 15, ausgebildet als Schleppketten, dargestellt, welche zueinander parallel angeordnet sind.

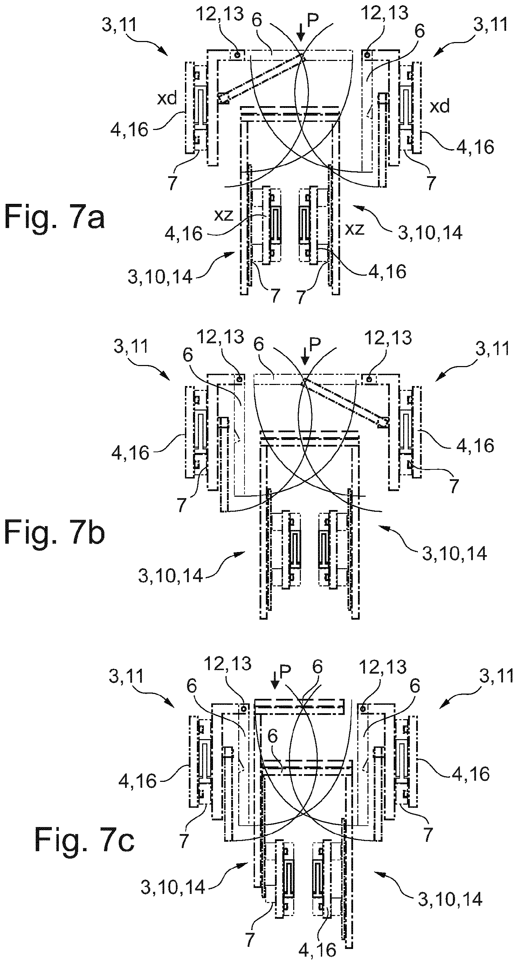

Die Figuren 7 a, b, c zeigen ein weiteres Ausführungsbeispiel für eine Förderanlage 1, wobei die Förderanlage 1 vier Achsvorrichtungen 3 aufweist, wobei zwei der Achsvorrichtungen 3 als Schwenkversatzachsvorrichtungen 11 und zwei der Achsvorrichtungen 3 als eine Linearversatzvorrichtung 10, in diesem Ausführungsbeispiel jeweils als eine Hubversatzachsvorrichtung 14 ausgebildet ist. Die zwei Schwenkversatzachsvorrichtungen 11 und eine der Hubversatzachsvorrichtungen 14 sind identisch wie bei der Förderanlage 1 in den vorhergehenden Figuren ausgebildet, so dass auf die entsprechende Beschreibung verwiesen wird.

Die vorliegende Förderanlage 1 wurde um eine weitere Hubversatzachsvorrichtung 14 ergänzt, wobei diese gegengleich und/oder symmetrisch zu der bereits vorhandenen Hubversatzachsvorrichtungen 14 angeordnet ist. Die zwei Hubversatzachsvorrichtungen 14 nutzen im Rücklauf, wenn die Bauteilaufnahmeabschnitte 6 in dem Ausweichzustand sind, das gleiche Rückführvolumen, so dass diese eine vorgegebene Reihenfolge aufweisen. Die Bauteilaufnahmeabschnitte 6 der Schwenkversatzachsvorrichtungen 11 können bei der Förderanlage 1 in den Figuren 7 a, b, c wahlfrei eingesetzt werden, die Bauteilaufnahmeabschnitte 6 der Hubversatzachsvorrichtungen 14 sind in der Reihenfolge nicht änderbar.

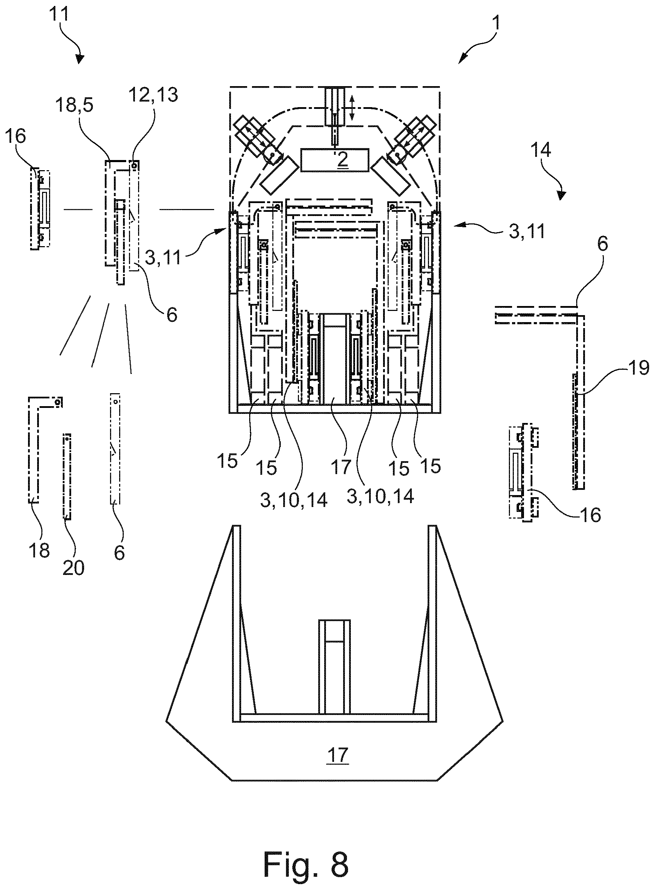

Die Figur 8 zeigt eine mögliche konstruktive Ausgestaltung der Förderanlage 1 mit den vier Achsvorrichtungen aus den Figuren 7 a, b, c. Ergänzend zu den Komponenten der vorhergehenden Figuren ist nun die Bauteilstation 2 sowie ein Gestell 17 zu erkennen, an denen die jeweiligen Linearachseinrichtungen 4 und/oder die Führungen 16 festgelegt sind. Zudem sind die Versorgungseinrichtungen 15, ausgebildet als Schleppketten, dargestellt, welche zueinander parallel angeordnet sind. Wie auch bei der Ausgestaltung in der Figur 6 können statt der zwei Hubversatzachsvorrichtungen 14 beispielsweise zwei Linearversatzachsvorrichtungen 10, wie diese beispielsweise in der Figur 3 b gezeigt sind, integriert werden.

Nach unten versetzt ist das Gestell 17 gezeigt, welches zwei Seitenbereiche und einen Mittelsteg zur Anordnung der Achsvorrichtungen 3 aufweist. Auf der linken Seite ist eine der Schwenkversatzachsvorrichtungen 11 gezeigt, wobei zu erkennen ist, dass der Bauteilaufnahmeabschnitt 6 um die Schwenkachse 13 an einem Halter 18 geschwenkt wird, wobei zwischen dem Halter 18 und dem Bauteilaufnahmeabschnitt 6 diagonal eine Abstützung 20 anordenbar ist. Die Abstützung 20 kann durchgängig ausgebildet sein, alternativ ist diese als ein Knickgelenk realisiert. Der Halter 18 kann auskragend ausgebildet sein, um die Zustelleinrichtung 5 zu integrieren und/oder Platz für die Aussteifung 20 zu schaffen. Auf der rechten Seite ist der Bauteilaufnahmeabschnitt 6 der Hubversatzachsvorrichtung 14 gezeigt, welcher als ein L-förmiges Bauteil ausgebildet ist. Der Bauteilaufnahmeabschnitt 6 kann über eine Hubführungsschiene 19 durch die nicht dargestellte Zustelleinrichtung 5 in der Höhe verschoben werden. Die Achsvorrichtungen 3 in der Figur 6 können ebenso aufgebaut sein.

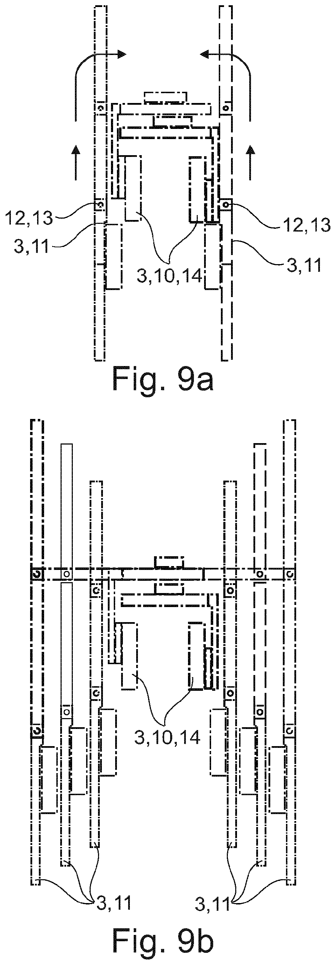

In den Figuren 9 a, b ist eine weitere Variante von Schwenkversatzachsvorrichtungen 11 illustriert. In der Figur 9 a ist ein Ausführungsbeispiel der Förderanlage 1 mit zwei Schwenkversatzachsvorrichtungen 11 sowie zwei Hubversatzachsvorrichtungen 14 gezeigt. Die Hubversatzachsvorrichtung 14 sind ausgebildet wie zuvor beschrieben. Die Schwenkversatzachsvorrichtungen 11 sind in Abgrenzung zu den vorhergehenden Ausführungsbeispielen jeweils als eine Hub-Schwenkversatzachsvorrichtung ausgebildet, wobei die Bauteilaufnahmeabschnitte 6 nicht nur geschwenkt, sondern ergänzend in einer Linearrichtung verschoben werden, um diese in dem Ausweichzustand zurückziehen zu können.

Der Vorteil dieser Ausgestaltung ist in der Figur 9 b zu erkennen, wobei insgesamt sechs Schwenkversatzachsvorrichtungen 11 dargestellt sind, welche jeweils als Hub-Schwenkversatzachsvorrichtungen ausgebildet sind. Die Bauteilaufnahmeabschnitte 6 sind bezogen auf eine Querrichtung zu der Haupttransportrichtung und zwar in Transportposition unterschiedlich breit ausgebildet, wobei die weiter außen angeordneten Bauteilaufnahmeabschnitte 6 breiter als die weiter innen angeordneten Bauteilaufnahmeabschnitte 6 ausgebildet sind. Die Schwenkversatzachsvorrichtungen 11 sind beidseitig klammerartig um die Stationsstrecke S und/oder die Hubversatzachsvorrichtungen 14 angeordnet. Bei der Überführung von dem Ausweichzustand in die Transportposition werden die jeweiligen Bauteilaufnahmeabschnitte 6 zunächst linear verfahren und nachfolgend um den Schwenkbereich 12 bzw. die Schwenkachse 13 geklappt. Es kann sich auch um eine kombinierte und/oder überlagerte Schwenk-Iinear-Bewegung handeln. In einer kostengünstigen Ausfertigung kann diese kombinierte Bewegung mit einem Aktuator ausgeführt werden. Die kombinierte Bewegung kann bei der Schwenkversatzvorrichtung11, der Linearversatzvorrichtung 10 und/oder der Hubversatzvorrichtung 14 verwendet werden. Bei der Überführung von der Transportposition in den Ausweichzustand werden jeweiligen Bauteilaufnahmeabschnitte 6 zurückgeklappt und nachfolgend linear verfahren, so dass diese bündig oder unterbündig zu der Transportposition angeordnet sind. Hierdurch ist es möglich, dass auch die außen angeordneten Hub-Schwenkversatzachsvorrichtungen den jeweiligen Bauteilaufnahmeabschnitt 6 in die Transportposition bringen können. Die Hubrichtungen der Schwenkversatzachsvorrichtungen 11 sind parallel zueinander und/oder gleichgerichtet zu der Prozessrichtung P ausgerichtet.

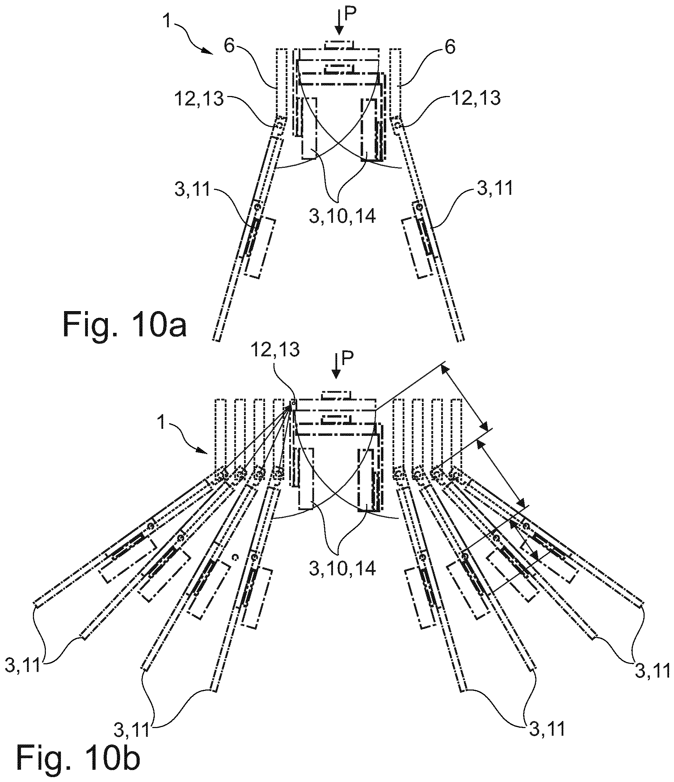

Die Figur 10a zeigt eine Förderanlage 1, welche wie in den vorhergehenden Figuren zwei zentrale Hubversatzachsvorrichtungen 14 sowie ergänzend zwei Schwenkversatzachsvorrichtungen 11 aufweist, welche als Hub-Schwenkversatzachsvorrichtungen ausgebildet sind. Die Hub-Schwenkversatzachsvorrichtungen sind beidseitig zu den Hubversatzachsvorrichtungen 14 angeordnet. Die lineare Verfahrbewegung und/oder die Hubbewegung der Hub-Schwenkversatzachsvorrichtungen sind jedoch gewinkelt zu der Prozessrichtung P und/oder umgekehrt v-förmig zueinander ausgerichtet. Um Bauraum zu sparen können die Bauteilaufnahmeabschnitte 6 so verfahren werden, dass in der gezeigten axialen Draufsicht die Schwenkbereiche 12 deckungsgleich zu der Position des Bauteilaufnahmeabschnitts 6 der Hubversatzachsvorrichtung 14 jeweils in Transportposition angeordnet ist.

Die Figur 10 b zeigt eine Förderanlage 1, welche wie bei der Förderanlage 1 in der Figur 10 a zwei zentrale Hubversatzachsvorrichtungen 14 vorgesehen sind. Statt nur zwei Schwenkversatzachsvorrichtungen 11 sind in der Figur 10 b jedoch acht Schwenkversatzachsvorrichtungen 11 vorgesehen, welche jeweils als Hub-Schwenkversatzachsvorrichtungen ausgebildet sind und wobei auf jeder Seite der zentralen Hubversatzachsvorrichtungen 14 vier dieser Achsvorrichtungen 3 angeordnet sind. Die Hub-Schwenkversatzachsvorrichtungen weisen pro Seite jeweils einen unterschiedlichen Anstellwinkel auf. Die Bauteilaufnahmeabschnitte 6 sind jedoch alle gleich breit ausgebildet. Es ist vorgesehen, dass durch die Hubbewegung und/oder lineare Verfahrbewegung der Schwenkbereich 12 bzw. die Schwenkachse 13 pro Seite jeweils an die gleiche Position gesetzt werden kann.

Optional ergänzend können die Förderanlagen 1 in den Figuren 9 a, b sowie 10 a, b weitere Linearversatzachsvorrichtungen 10 aufweisen, wie diese in den Figuren 3 a - d dargestellt sind.

Bei den gezeigten Förderanlagen 1 in den Figuren können stets bei mindestens zwei Achsvorrichtungen 3 die Bauteilaufnahmeabschnitte 6 seitlich versetzt zueinander angeordnet und/oder anordenbar sein. Dadurch wird es ermöglicht, dass die Bauteilaufnahmeabschnitte 6 in dem Ausweichzustand kollisionsfrei aneinander und/oder an anderen Bauteilaufnahmeabschnitten 6 und/oder an der Stationsstrecke S vorbeifahren können. Insbesondere nutzen die jeweiligen Wagenbaugruppen 7 unterschiedliche Rückführvolumina im Bereich der Stationsstrecke S, wobei die Rückführvolumen der zwei seitlich beabstandeten Achsvorrichtungen 3 voneinander beabstandet und/oder nicht-überlappend angeordnet sind. Genau die Achsvorrichtungen 3, welche ein eigenes Rückführvolumen nutzen, welches von keinem anderen Bauteilaufnahmeabschnitt 6 durchfahren wird, können den eigenen Bauteilaufnahmeabschnitt 6 wahlfrei für die Stationsstrecke S anordnen.

Bei den gezeigten Förderanlagen 1 in den Figuren können mindestens zwei Linearversatzachsvorrichtungen 10 vorgesehen sein oder können zusätzlich integriert werden. Eine der Linearversatzachsvorrichtungen 10 kann dabei als eine Hubversatzachsvorrichtung 14 ausgebildet sein. Die Linearversatzachsvorrichtungen 10 verschieben den Bauteilaufnahmeabschnitt 6 in eine linearen und/oder geradlinigen Raumrichtung R. Die Raumrichtung A definiert eine Projektionsrichtung R'. Bei den gezeigten Förderanlagen sind bei mindestens 2 Linearversatzachsvorrichtungen 10 die Projektionsrichtungen R' unterschiedlich ausgebildet. Unterschiedlich ausgebildet kann ein Winkelversatz oder auch eine antiparallele Anordnung sein. Zwischen den Projektionsrichtungen kann ein Zwischenwinkel ungleich von 0°, 90° und 180° vorliegen. Insbesondere kann der Zwischenwinkel beliebig gewählt werden. Es kann sich z.B. um einen stumpfen oder um einen spitzen Zwischenwinkel handeln.

Bei den gezeigten Förderanlagen 1 kann mindestens eine der Achsvorrichtungen 3 als die Schwenkversatzachsvorrichtung 11 ausgebildet sein. Beispielsweise ist der Bauteilaufnahmeabschnitt 6 als ein Ausleger ausgebildet. Der Bauteilaufnahmeabschnitt 6 kann - wie in den Figuren gezeigt - von der Transportposition in den Ausweichzustand eingeklappt werden, also in Richtung der Linearversatzachsvorrichtung 10 geschwenkt werden. Alternativ hierzu kann der Bauteilaufnahmeabschnitt 6 auch in Gegenrichtung aufgeklappt werden.

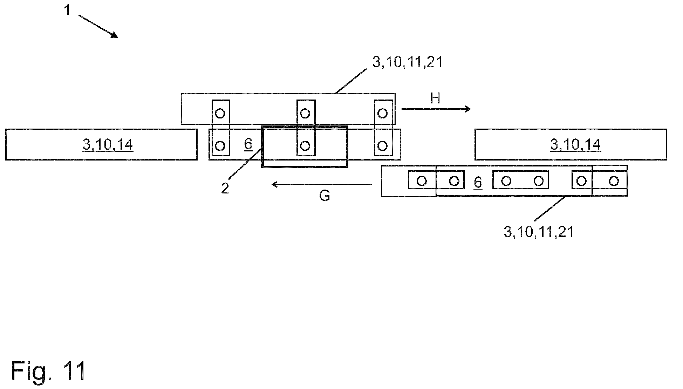

Die Figur 11 zeigt in einer schematischen Draufsicht von oben eine Förderanlage 1 als ein weiteres Ausführungsbeispiel der Erfindung. Die Förderanlage 1 weist vier Achsvorrichtungen 3 auf, wobei zwei der Achsvorrichtungen 3 als Hubversatzachsvorrichtungen 14 ausgebildet sind, wie dies zuvor beschrieben wurde.

Die verbleibenden zwei Achsvorrichtungen 3 sind dagegen als Linearschwenkachsvorrichtungen 21 ausgebildet, wobei die Linearschwenkachsvorrichtungen 21 sowohl als Linearversatzachsvorrichtungen 10 als auch als Schwenkversatzachsvorrichtungen 11 realisiert sind. Bei den Linearschwenkachsvorrichtungen 21 wird der jeweilige Bauteilaufnahmeabschnitt 6 über die Zustelleinrichtung 5 in der Wagenbaugruppe 7 verschwenkt. Die Schwenkung erfolgt koplanar und/oder in einer gemeinsamen Ebene, wie diese durch den Bauteilaufnahmeabschnitt 6 in der Transportposition eingenommen wird. Durch die Schwenkung wird der Bauteilaufnahmeabschnitt 6 parallel in der gemeinsamen Ebene versetzt, so dass durch die zwei Linearschwenkachsvorrichtungen 21 die Bauteilaufnahmeabschnitte 6 in der Projektionsebene senkrecht zu der Haupttransportrichtung jeweils eine Projektionsrichtung definieren, welche unterschiedlich ausgebildet sind und vorliegend gegenläufig ausgerichtet sind. Damit können die Linearschwenkachsvorrichtungen 21 als Linearversatzachsvorrichtungen 10 ausgebildet sein. Zugleich können die Linearschwenkachsvorrichtungen 21 als Schwenkversatzachsvorrichtungen 11 bezeichnet werden, da die Bauteilaufnahmeabschnitte 6 um einen weiteren Schwenkbereich geschwenkt werden, wobei der weitere Schwenkbereich senkrecht zu der zuvor genannten gemeinsamen Ebene ausgerichtet ist. Beim Abfahren der Stationsstrecke S in der Haupttransportrichtung H sind die Bauteilaufnahmeabschnitte 6 ausgeschwenkt und damit in der Transportposition, in Gegenrichtung sind die Bauteilaufnahmeabschnitte 6 eingeschwenkt und dadurch in dem Ausweichzustand.

Die Schwenkversatzachsvorrichtungen 11 können in jeder der Förderanlagen 1 der vorhergehenden Figuren integriert werden.

Die Förderanlagen 1 erlauben damit insbesondere ein Positionieren und Transportieren von Bauteilen, insbesondere Materialien relativ zu einer Prozesseinheit in der Bauteilstation 2 insbesondere bei einem kontinuierlichen Transport z.B. für:
- Bedrucken von Oberflächen von Bauteilen
- Vermessen von Oberflächen von Bauteilen
- Digitalisieren von Oberflächenstrukturen, Farben und Eigenschaften von Bauteilen
- Sonstige Prozessierung, Behandlung oder Analyse von Bauteiloberflächen
- Prozessierung von Materialien bei kontinuierlicher oder getakteter Arbeitsweise.

Die zugrundeliegende Funktion lässt sich wie folgt zusammenfassen:
- Kreislaufbewegung der Bauteilhalter bzw. Bauteilaufnahmeabschnitte 6 obwohl diese optional mit einem Kabelschlepp als Versorgungseinrichtung 15 versehen sind;
- Kontinuierliche Materialbewegung unter dem Prozesskopf (Ablaufseitig vergleichbar kontinuierlich laufendem Förderband) oder in der Bauteilstation 1;
- Ausdehnung des Prozesskopfes und/oder der Bauteilstation 2 über eine größere Fläche, verschiedene Wirkzonen, die ein und dieselbe Fläche auf dem Bauteil erfassen müssen und örtlich zueinander justiert sein müssen
- Hohe Präzision der Führung der Bauteilaufnahmeabschnitte 6 in Querrichtung zur Förderbewegung bzw. Haupttransportrichtung;
- Hohe Gleichmäßigkeit der Bewegung im Bereich der Prozesseinheit bzw. Bauteilstation 2 möglich;
- Hohe Fördergeschwindigkeit bis über 1.5 m/s (Beispiel: bei 0,5m Bauteillänge 0,5 Sekunden Prozesszeit, bei 2m Bauteillänge 2 Sekunden Prozesszeit) möglich;
- Skalierbar bezüglich der Geschwindigkeit und Formate des Bauteils möglich;
- Das Bauteil auf der Oberfläche so aufnehmen zu können, dass eine definierte Position erreicht werden kann (entweder bekannt oder "eingefroren", so dass eine vorausgehende Vermessung der ist Position und Lage sowie möglicher Verformungseffekte möglich ist);
- Steife Anbindung an die Prozesseinheit bzw. Bauteilstation 2, um hoch reproduzierbare relative Positionierung von Bauteil und Prozesseinheit bzw. Bauteilstation 2 zu ermöglichen.
- Details der wesentlichen Anforderungen:
- Bevorzugt müssen Bauteile, insbesondere Materialien präzise zu der Prozesseinheit bzw. Bauteilstation 2 positioniert werden. Besondere Anforderung ist, dass die Bauteile mit konstanter Geschwindigkeit unter der Prozesseinheit bzw. Bauteilstation 2 hindurchbewegt werden, so dass sowohl quer zur Förderrichtung als auch längs zur Förderrichtung eine hohe Gleichmäßigkeit der Bewegung erforderlich ist. Der Prozess kann fordern, dass das Bauteil mit einer max. zulässigen dynamischen Abweichung im Bereich von ca. 5 µm/13 ms bewegt werden kann.
- Die Kosten der Prozesseinheit bzw. Bauteilstation 2 können sehr hoch sein, so dass eine maximale Auslastung der Prozesseinheit bzw. Bauteilstation 2 (idealerweise unterbrechungsfrei) sowohl bezüglich Prozessstabilität als auch der Wettbewerbsfähigkeit des Systems erstes Optimierungsziel darstellt.
- Die zu prozessierenden Bauteile sind vorzugsweise vorwiegend länglich, da die Prozesseinheit bzw. Bauteilstation 2 in Interesse der Investitionskosten möglichst schmal ausgeführt werden sollte.

Die Prozesseinheit bzw. Bauteilstation 2 kann eine Länge bis über 2m erreichen, um gestaffelt die komplette Breite des Bauteils abdecken zu können so dass eine Prozessierung in einem Durchlauf möglich wird.
- Die zu prozessierenden Bauteile können auf der Materialtransporteinheit, insbesondere dem Bauteilaufnahmeabschnitt 6 fixiert werden, um diese in Form zu bringen oder die aktuelle Form zu fixieren, dass eine präventive Vermessung ermöglicht wird.

Insbesondere ist die Förderanlage 1 als eine Ausführung eines Shuttle Systems ausgebildet, welche es ermöglicht mit mehr als zwei Shuttleeinheiten als Bauteilhalter 8 zu arbeiten, so dass die geringe Prozesszeit reduziert werden kann.

Mögliche Variante: Ergänzung der zwei umeinanderkreisenden Shuttles bei der Hubversatzachsvorrichtung 14 mit von der Seite einschiebbaren Shuttle (zwei Shuttle rotieren vertikal umeinander, ein oder zwei Shuttle rotieren horizontal um die vertikalen Shuttles)
Mögliche Variante: Ergänzung der vorhergehenden Variante um im Raumwinkel angeordnete Shuttles, die es ermöglichen mehrere der Rotationsschleifen auf der einen Seite ineinander zu legen (In Prozessbahn schieben, unter Prozessierung durchfahren, aus der Prozessbahn herausbewegen und auf eine "freie" Rückfahrstrecke zurückbewegen
Mögliche Variante: Ausführung mit zusätzlichen oder komplett mit wegklappbaren Shuttles ausgestattetes System ausgebildet als Schwenkversatzachsvorrichtung 11, so dass die Shuttles weggeklappt den Rückweg antreten können. Dies hat den für die Präzision entscheidenden Vorteil, dass der Bauraum minimiert wird und der Kraftfluss zur Prozesseinheit bzw. Bauteilstation 2 gekürzt und damit die Eigenschaften des Systems bezüglich Präzision und Reproduzierbarkeit deutlich gesteigert werden kann.
- Durch die Fähigkeit des Shuttles mit einem Kabelschlepp als Versorgungseinrichtung 15 betrieben werden zu können, ist jegliche Erweiterung um zusätzliche mitfahrende Sensorik oder Aktuatoreinheiten: z.B. Greifer, Sensoren, Achssystem für Freiheitsgrade bei der Bauteilorientierung durch das Konzept grundsätzlich ermöglicht.
- Durch die vergrößerte Anzahl der Shuttles ist es möglich Zeit für das Be- und Entladen der Shuttles zu bekommen, ohne dass die Prozesseinheit bzw. Bauteilstation 2 auf den Vorgang warten muss (je mehr Shuttles desto schneller kann die Prozesseinheit bzw. Bauteilstation 2 durchfahren werden

Die Erfindung kann optional oder in bevorzugter Ausgestaltung wie folgt dargestellt werden:
- Ein Shuttle System als Förderanlage 1 mit mehr als zwei Shuttle, bei denen
- alle Shuttle unter einer gemeinsam genutzten Prozesseinheit bzw. Bauteilstation 2 durchfahren können
- die Shuttle dauerhaft in Verbindung mit dem Gestell sind (z.B. über ein Kabelschlepp, Führungsschiene)
- die Bewegung der Shuttle über eine Führungsschiene hoch präzise quer zur Förderrichtung geführt wird
- die Shuttles sich mit konstanter Geschwindigkeit durch die Prozesseinheit bewegen können oder alternativ dort getaktet positioniert werden können
- die Shuttles sich sequenziell durch die Prozesseinheit bewegen (nur minimale Lücken zwischen den Shuttles vorhanden sind) - die Reihenfolge ist vorwiegend fix, kann jedoch gegeben falls variiert werden
- eine Be- und Entladeschnittstelle für die Bestückung der Shuttles in der Maschine an einer oder zwei verteilten Stellen vorgesehen ist.

### Bezugszeichenliste

- 1: Förderanlage
- 2: Bauteilstation
- 3: Achsvorrichtung
- 4: Linearachseinrichtung
- 5: Zustelleinrichtung
- 6: Bauteilaufnahmeabschnitt
- 7: Wagenbaugruppe
- 8: Bauteilhalter
- 9: Bauteil
- 10: Linearversatzachsvorrichtung
- 11: Schwenkversatzachsvorrichtung
- 12: Schwenkbereich
- 13: Schwenkachse
- 14: Hubversatzachsvorrichtung
- 15: Versorgungseinrichtung
- 16: Führung der Wagenbaugruppe
- 17: Gestell
- 18: Halter
- 19: Hubführungsschiene
- 20: Abstützung
- 21: Linearschwenkachsvorrichtung
- H: Haupttransportrichtung
- G: Gegenrichtung
- B: Beladestation
- E: Entladestation
- S: Stationsstrecke
- P: Prozessrichtung
- PE: Projektionsebene
- R: Raumrichtung
- R': Projektionsrichtung

## Patentansprüche

1. Förderanlage (1)
mit mindestens drei Achsvorrichtungen (3) zum Transport von einem Bauteilaufnahmeabschnitt (6) zur Aufnahme eines Bauteils (9) und/oder eines Bauteilhalters (8) auf einer Stationsstrecke (S) entlang einer Haupttransportrichtung (H) in einer Bauteilstation (2),
wobei die Achsvorrichtungen (3) jeweils eine Wagenbaugruppe (7) mit dem Bauteilaufnahmeabschnitt (6) und mit einer Zustelleinrichtung (5) zum Zustellen des Bauteilaufnahmeabschnitts (6) von einem Ausweichzustand in eine Transportposition sowie
eine Linearachseinrichtung (4) zum Verfahren des Bauteilaufnahmeabschnitts (6) in der Transportposition entlang der Stationsstrecke (S) in der Haupttransportrichtung (H) und zum Rückführen des Bauteilaufnahmeabschnitts in dem Ausweichzustand in einer Gegenrichtung aufweist,
**dadurch gekennzeichnet, dass**
mindestens eine der Achsvorrichtungen (3) als eine Schwenkversatzachsvorrichtung (11) zum Schwenken des Bauteilaufnahmeabschnitts (6) um einen Schwenkbereich (12) ausgebildet ist, um den Bauteilaufnahmeabschnitt (6) von dem Ausweichzustand in die Transportposition und/oder in Gegenrichtung zu bringen.

2. Förderanlage (1) nach Anspruch 1, **dadurch gekennzeichnet, dass** der Bauteilaufnahmeabschnitt (6) als ein Ausleger ausgebildet ist, der um den Schwenkbereich (12) von der Transportposition in den Ausweichzustand und/oder in Gegenrichtung verschwenkbar ist.

3. Förderanlage (1) nach Anspruch 1 oder 2, **dadurch gekennzeichnet, dass** der Bauteilaufnahmeabschnitt (6) bei dem Übergang von dem Ausweichzustand in die Transportposition und/oder in Gegenrichtung um mindestens 60°, vorzugsweise um mindestens 75° und/oder weniger als 120°, insbesondere weniger als 105° verschwenkt wird und/oder verschwenkbar ist.

4. Förderanlage (1) nach einem der vorhergehenden Ansprüche, **dadurch gekennzeichnet, dass** der Schwenkbereich (12) zu der Haupttransportrichtung (H) gleichgerichtet ist.

5. Förderanlage (1) nach einem der vorhergehenden Ansprüche, **dadurch gekennzeichnet, dass** die Förderanlage (1) zwei der Schwenkversatzachsvorrichtungen (11) aufweist, wobei die Schwenkversatzachsvorrichtungen (11) auf gegenüberliegenden Seiten oder auf einer gemeinsamen Seite der Stationsstrecke (S) angeordnet sind.

6. Förderanlage (1) nach einem der vorhergehenden Ansprüche, **dadurch gekennzeichnet, dass** bei der Förderanlage (1) mindestens eine Achsvorrichtung (3) als eine Linearversatzachsvorrichtung (10) ausgebildet ist, welche den Bauteilaufnahmeabschnitt (6) in einer Raumrichtung (R) der Zustelleinrichtung (5) linear versetzt.

7. Förderanlage (1) nach Anspruch 6, **dadurch gekennzeichnet, dass** die Förderanlage (1) mindestens zwei der Linearversatzvorrichtungen (10) aufweist, wobei die Raumrichtungen (R) in einer Projektionsebene (PE) senkrecht zu der Haupttransportrichtung (H) jeweils eine Projektionsrichtung (R') definieren, wobei die Projektionsrichtungen (R') unterschiedlich ausgebildet sind.

8. Förderanlage (1) nach Anspruch 7, **dadurch gekennzeichnet, dass** zwischen den Projektionsrichtungen (R') von zwei der Linearachsvorrichtungen (10) ein stumpfer oder ein spitzer Zwischenwinkel vorliegt.

9. Förderanlage (1) nach einem der vorhergehenden Ansprüche, **dadurch gekennzeichnet, dass** die Bauteilaufnahmeabschnitte (6) in dem Ausweichzustand in dem Bereich der Stationsstrecke (S) seitlich versetzt zueinander angeordnet und/oder anordenbar sind.

10. Förderanlage (1) nach einem der vorhergehenden Ansprüche, **dadurch gekennzeichnet, dass** die Bauteilaufnahmeabschnitte (6) in dem Ausweichzustand derart seitlich versetzt angeordnet sind, so dass diese in dem Bereich der Stationsstrecke (S) kollisionsfrei aneinander und/oder an einem der sich durch die Stationsstrecke S bewegenden Bauteilaufnahmeabschnitt (6) vorbeifahren können.

11. Förderanlage (1) nach einem der vorhergehenden Figuren, **dadurch gekennzeichnet, dass** die Bauteilaufnahmeabschnitte (6) entlang der Stationsstrecke (S) wahlfrei anordenbar sind.

12. Förderanlage (1) nach einem der vorhergehenden Ansprüche, **dadurch gekennzeichnet, dass** die Achsvorrichtungen (3) jeweils eine Versorgungseinrichtung (15) zur Versorgung der Wagenbaugruppe (7) mit Energie und/oder Signalkommunikation aufweist, wobei die Versorgungseinrichtung (15) im Betrieb der Achsvorrichtung (3) dauerhaft mit der Wagenbaugruppe (7) verbunden ist.

13. Förderanlage (1) nach einem der vorhergehenden Ansprüche, **dadurch gekennzeichnet, dass** die Bauteilhalter (8) als aktive Bauteilhalter ausgebildet sind, welche mit Energie und/oder Signalkommunikation versorgt sind.

14. Förderanlage (1) nach einem der vorhergehenden Ansprüche, **dadurch gekennzeichnet, dass** die Linearversatzachsvorrichtung (10) als eine Hubversatzachsvorrichtung (14) ausgebildet ist, wobei der Bauteilaufnahmeabschnitt (6) in der Höhe und/oder in der Projektionsrichtung (P) versetzbar ist.

15. Förderanlage (1) nach einem der vorhergehenden Ansprüche, **dadurch gekennzeichnet, dass** diese zwei Hubversatzachsvorrichtungen (14) sowie mindestens eine Linearversatzvorrichtung (10) und/oder mindestens eine Schwenkversatzachsvorrichtung (11) aufweist.
